# EUROPEAN PATENT SPECIFICATION

(11) **EP 3 111 747 B1**
(45) Date of publication and mention of the grant of the patent: **15.08.2018**
(21) Application number: 16173134.4
(22) Date of filing: 06.06.2016
(51) Int. Cl.: A01F 15/07

(54) **WRAPPING APPARATUS AND METHOD WITH A WRAPPING MATERIAL SEVERING DEVICE COMPRISING AN OWN ACTUATOR**
EINWICKLUNGSVORRICHTUNG UND VERFAHREN MIT EINER EINWICKLUNGSMATERIALTRENNVORRICHTUNG MIT EINEM EIGENEN AKTUATOR
APPAREIL D'EMBALLAGE ET PROCÉDÉ AVEC UN DISPOSITIF DE SÉPARATION DE MATÉRIAU D'EMBALLAGE COMPRENANT SON PROPRE ACTIONNEUR

(30) Priority: 02.07.2015 NL 2015078
(43) Date of publication of application: 04.01.2017
(73) Proprietor: Forage Innovations B.V., 3147 PB Maassluis (NL)
(72) Inventor: VERWEIJ, Rochus, 3147PB MAASSLUIS (NL); REIJERSEN VAN BUUREN, Willem Jacobus, 3147PB MAASSLUIS (NL); VISSER, Arend Cornelis, 3147PB MAASSLUIS (NL)
(74) Representative: AGCO Intellectual Property Department

(56) References cited:
- EP-A1- 0 766 912
- WO-A1-2016/148565
- WO-A2-2005/009112
- US-A- 5 231 828
- US-A1- 2007 157 556
- US-A1- 2010 162 676

## Description

### FIELD OF THE INVENTION

The invention refers to a wrapping apparatus and to a wrapping method for conveying a web of wrapping material towards a wrapping material inlet, for injecting the conveyed web through the inlet into a chamber containing an object to be wrapped, and for severing the web, in particular for forming a bale in a bale forming chamber, for wrapping the bale in the bale forming chamber into a web of wrapping material, and for severing the web, e.g. for forming and wrapping a round-cylindrical bale made from loose agricultural crop material in a drum-shaped bale forming chamber.

### BACKGROUND OF THE INVENTION

The invention can be used on board of a bale forming apparatus as known for agricultural or recycling purposes. Such a bale forming apparatus (baler) forms under pressure from injected loose material a bale in a bale forming chamber, in particular a round-cylindrical bale in a drum-shaped bale forming chamber. In the case of a round baler a bale forming means (pressing belts and/or pressing rollers) rotates the loose material in the drum-shaped bale forming chamber and thereby forms a round-cylindrical bale. The bale is ejected out of the bale forming chamber and is deposited on the ground. A further bale can be formed in the bale forming chamber.

In order to prevent the ejected bale from falling apart, a wrapping device injects a web of wrapping material, e.g. a net or a plastic sheet, through a wrapping material inlet into the bale forming chamber. The driven bale forming means and the rotated bale together clamp and convey the inserted web. Several layers of wrapping material are placed around the circumferential surface of the bale in the bale forming chamber. Afterwards the web is severed at a severing position outside of the bale forming chamber. For this purpose a moveable severing member is moved towards the web and severs the web, e.g. by penetrating it. The wrapped bale is ejected out of the bale forming chamber.

The web and later the moveable severing member have to be moved outside of the bale forming chamber in a proper way and at the proper time. Several proposals how to move a web towards a bale forming chamber and how to sever it have been made.

WO 2016148565 A1 being an elder right according to Art. 54(3) EPC discloses the features of the preamble of the independent claims. Disclosed is a bale forming and wrapping apparatus and a bale forming and wrapping method. A bale forming means (40, 41.1, 41.2, 42, 44) forms from loose material a bale (B) in a bale forming chamber. A web moving member (3, 20, 48) moves a web (30) of wrapping material towards a wrapping material inlet (15) into the bale forming chamber. A guiding member guides the web moving member (3, 20, 48). A slack leading segment (35) of the web (30) is carried by a supporting plate (3) of the web moving member (3, 20, 48). Preferably adownholder unit (48) keeps the leading segment (35) on the moved supporting plate (3). The leading segment (35) remains slack while the web moving member (3, 20, 48) moves the web (30).

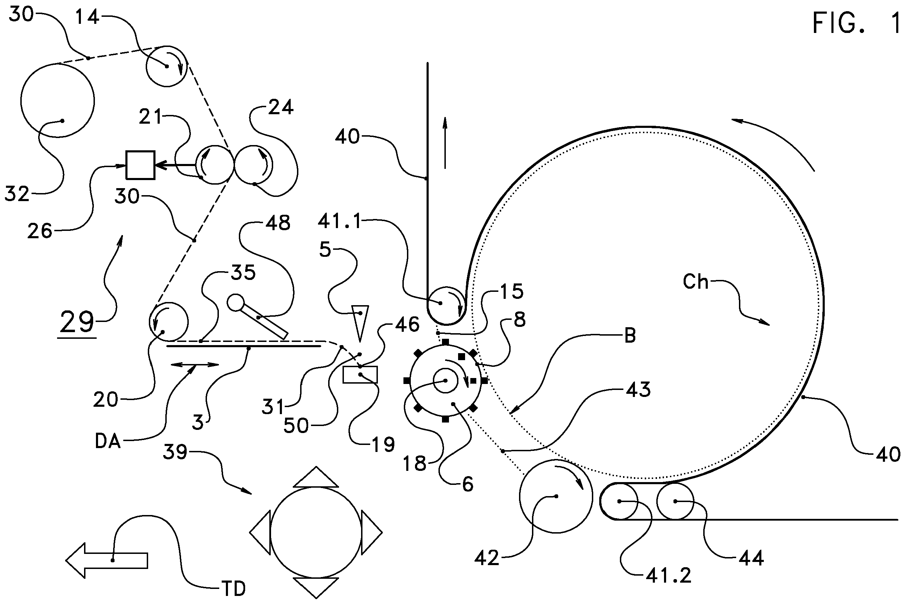

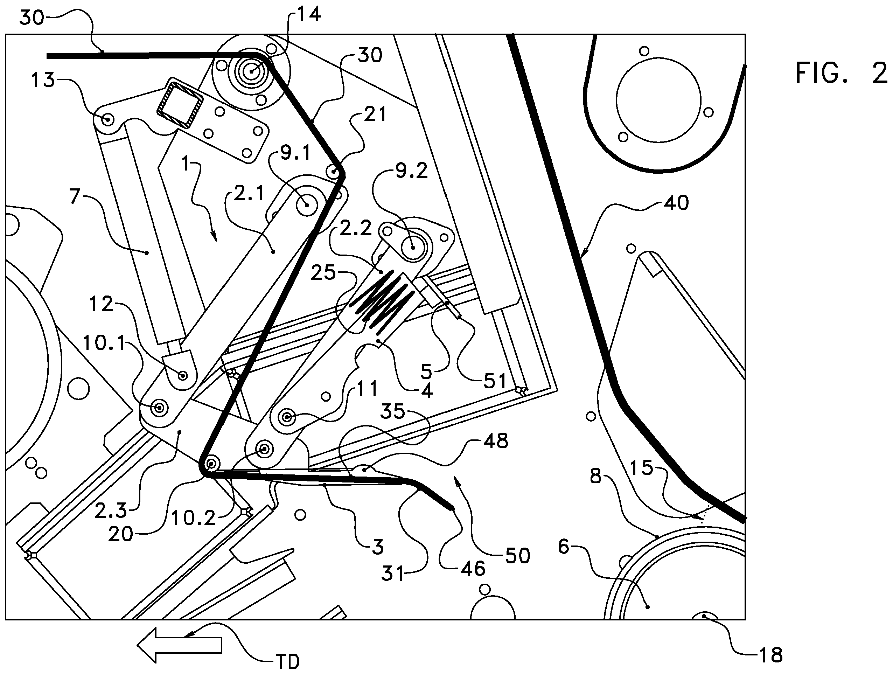

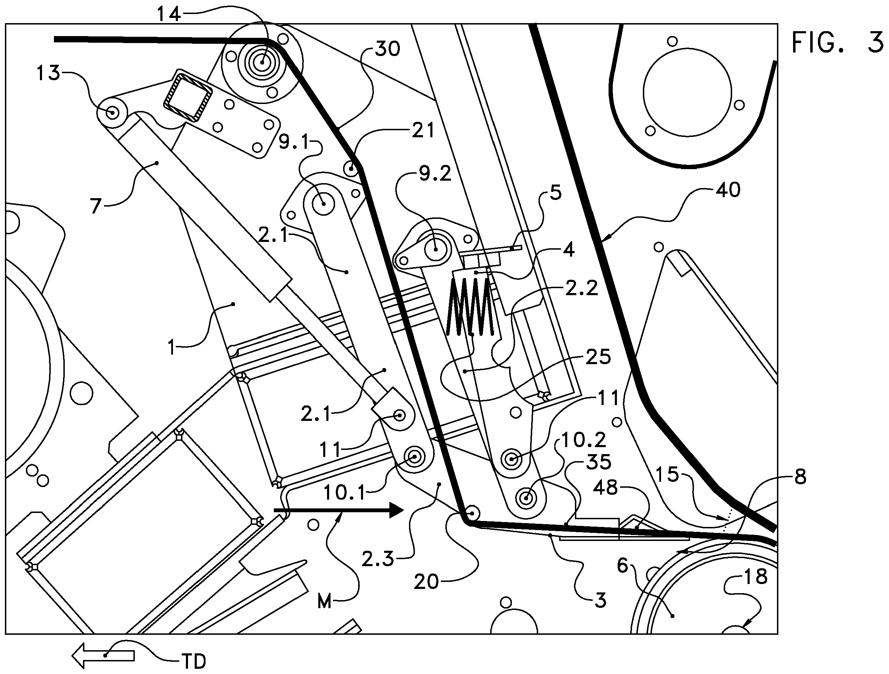

EP 0766912 A1 discloses a round baler 10 with a fixed chamber, cf. Fig. 1. A bale forming chamber is defined by an apron assembly 28 comprising a plurality of parallel tubular crop engaging slats 33. A wrapping apparatus comprises a net dispensing assembly 11 with a supply reel 13 and a severing assembly 12 for cutting a web of wrapping material, cf. Fig. 2. The severing assembly 12 comprises a shear bar 47 and a transverse knife 48 which is affixed to a mounting member 49. The mounting member 49 extends between a pair of parallel knife support arms 50, 50' which can rotate around pivots 51, 51', cf. Fig. 2, Fig. 3, ff. Coupling links 52, 52' are at one end pivotally attached to the knife support arms 50, 50' and at the other end attached to dispensing assembly frame members 43, 43'. These frame members 43, 43' are fixedly mounted at a cross tube 44. Clamping members 45, 46 are mounted at the frame members 43, 43' and have tips which can grasp a web (net n) of wrapping material. An electrical actuator assembly 53 can move a driving element 54. This driving element 54 is pivotally attached to one end of a link 55. The other endo f this link 55 is attached to a cross tube 44.

US 2007/0157556 A1 discloses a wrapping device for a round baler. A web dispensing device 1 in the form a rocker lever can be pivoted between a parking position (Fig. 1), a net gripping position (Fig. 2), and an operative position (Fig. 3). The rocker lever 1 keeps the free end of a net 3 by means of two rollers 26, 27 and a plate 31.

For moving the net 3 to a wrapping material inlet (gap 38 between the pressing rollers 36 and 37), the rocker lever 1 is moved from the parking position of Fig. 1 into the net gripping position of Fig. 2. The roller 36 grasps the net 3 and conveys it into the baling chamber. Afterwards the rocker lever 1 is moved into the operative position of Fig. 3, thereby tensioning the net 3. After the bale is entirely wrapped, the rocker lever 1 is moved from the operative position of Fig. 3 back into the parking position of Fig. 1. This movement is transferred onto a cutting device 5 with a cutting element 6. The cutting element 6 penetrates and severs the net 3.

### SUMMARY OF THE INVENTION

A problem solved by the invention is to provide a wrapping apparatus with the features of the preamble of claim 1 and a wrapping method with the features of the preamble of claim 14 wherein less synchronization between the movement of the web moving member and that of the moveable severing member is required.

This problem is solved by a wrapping apparatus with the features of claim 1 and by a wrapping method with the features of claim 14. Preferred embodiments are specified in the depending claims.

An object to be wrapped is contained in a chamber. A wrapping material inlet guides into this chamber. The wrapping material inlet enables the injection of a web of wrapping material into the chamber. The injected web is suitable for wrapping a surface of the object in the chamber.

The wrapping apparatus according to the invention comprises
- a web moving member,
- a web moving actuator,
- a severing device with a moveable severing member and with a severing actuator,
- a mechanical coupling element, and
- a position sensor.

The web moving member is positioned outside of the chamber and can be moved with respect to the wrapping material inlet between
- at least one remote position and
- an adjacent position.

The distance between the web moving member being in the adjacent position and the wrapping material inlet is smaller than the distance between the web moving member being in the or one remote position and the wrapping material inlet. By being moved into the adjacent position the web moving member can move a web of wrapping material towards the wrapping material inlet.

The severing device is also positioned outside of the chamber. The moveable severing member can be moved with respect to the web moving member and thereby with respect to a moved web of wrapping material between three different positions, namely
- a parking position,
- an intermediate position, and
- a web severing position.

The intermediate position is between the parking position and the web severing position, i.e. the distance from the moveable severing member to the web decreases when the moveable severing member is moved from the parking position into the intermediate position and further decreases when it is moved from the intermediate position into the web severing position. A distance between the web and the moveable severing member being in the parking position or in the intermediate position occurs.

In the web severing position the moveable severing member touches the web and contributes to sever the web.

The moveable severing member is mechanically connected and thereby coupled with the web moving member by means of the mechanical coupling element. Thanks to the coupling element a movement of the web moving member causes a movement of the moveable severing member.

The web moving actuator can move the web moving member and thereby the web from the or one remote position towards the wrapping material inlet into the adjacent position.

The severing actuator can move the moveable severing member and can operate independently from the web moving actuator.

The position sensor is arranged to detect the event that the web moving member or that the moveable severing member has reached a given position with respect to the wrapping material inlet.

The apparatus according to the invention operates as follows and the method according to the invention comprises the following steps:
- The web moving actuator moves the web moving member from the or one remote position into the adjacent position
- Thereby the moved web moving member conveys a web of wrapping material towards the wrapping material inlet.
- The moved web is injected through the wrapping material inlet into the chamber containing the object.
- The mechanical coupling element transfers a movement of the web moving member from a first position (the adjacent position or a remote position) into a second position (a remote position or the adjacent position) onto the moveable severing member. The second position differs from the first position. Thereby the moveable severing member is moved from the parking position into the intermediate position.
- The web moving member is temporarily kept in the second position. Thanks to the mechanical coupling element the moveable severing member is temporarily kept in the intermediate position.
- After the web is injected, the severing actuator moves the moveable severing member from the intermediate position into the web severing position. The injected web is severed by the movement of the moveable severing member into the web severing position.
- Later the severing actuator moves the moveable severing member back from the web severing position into the intermediate position.
- The wrapping apparatus triggers the severing actuator for moving the moveable severing member into the web severing position depending on signals from the position sensor.

### ADVANTAGES

The web moving member is itself moved and moves the web towards the wrapping material inlet. Thanks to the web moving member the web is guided and reliably conveyed - even under differing environment conditions. In the case of an agricultural or recycling vehicle using a wrapping apparatus according to the invention the web of wrapping material can in particular be subjected to wind, rain, dirt, or a sloping ground. Thanks to the web moving member the moved web nevertheless reaches the wrapping material inlet.

The moveable severing member can be moved into two different positions in which it does not touch the web, namely the intermediate position and the parking position. In the parking position the distance to the web is greater than in the intermediate position. The larger distance of the moveable severing member being in the parking position reduces the risk that loose material between the web and the moveable severing member causes a jam. This is an advantage over an arrangement in which the moveable severing member can only be moved into two different positions, namely the web severing position and only one remote position.

According to the invention the severing device comprises
- a moveable severing member and
- a severing actuator.

The severing actuator can move the moveable severing member between the intermediate position and the web severing position independently from the web moving member. In addition the mechanical coupling element connects the moveable severing member with the web moving member. Thanks to the mechanical coupling element the moveable severing member is moved by the web moving member from the parking position into the intermediate position. This movement does not require an action of the severing actuator.

According to the invention the wrapping apparatus comprises two actuators which can move independently from each other the moveable severing member, namely
- the web moving actuator via the web moving member and
- the coupling element and the severing actuator.

The severing actuator can be triggered substantially independent from the exact position of the web moving member. The severing actuator can operate regardless whether or not the web moving member is moved. Therefore less synchronization between the steps of moving the web moving member and of moving the moveable severing member is required.

Thanks to the mechanical coupling element a movement of the web moving member from the first into the second position moves the moveable severing member from the parking position into the intermediate position. Thanks to the invention it is possible but not necessary to adapt the movement of the web moving member to the severing position or to other requirements for properly severing the web at the proper time. The web moving actuator only has to move the web moving member but is not required for severing the web. For severing the web the severing actuator moves the moveable severing member from this intermediate position into the web severing position. The severing actuator only needs to move the moveable severing member over a shorter distance, namely from the intermediate position into the web severing position - compared with a movement along the entire path from the parking position into the web severing position. The severing actuator is not needed for moving the moveable severing member from the parking position into the intermediate position or vice versa.

The severing actuator can be implemented as a smaller device and/or as a quicker device - compared with a severing actuator which has to move the moveable severing member along the entire path from the parking position into the web severing position. If the severing actuator comprises a piston-cylinder unit, it suffices that the piston performs shorter strokes. Thanks to the shorter path the severing actuator needs less time for moving the moveable severing member into the web severing position without requiring more kinetic energy. It is easier to sever the web at the proper time. It is easier to provide a suitable severing actuator fulfilling the given severing constraints.

It is possible but thanks to the severing actuator not necessary to provide different remote positions for the web moving member coupled with the moveable severing member for the purpose of severing the web. In particular it is not necessary to move the web moving member into one remote position in which the moveable severing member severs the web and into a further remote position in which a distance between the moveable severing member and the web occurs. Thanks to the severing actuator the following operation can be performed after the web is injected: The web moving member can further be moved away from the wrapping material inlet in order to tension the injected web. Thanks to the invention this tensioning can be done before severing the web.

In general the same wrapping apparatus subsequently contributes to subsequently wrapping several objects in the same chamber. After wrapping one object into injected web and severing the web, a free end of the web of wrapping material is kept by the web moving member in a position outside of the chamber. The time span between the two events that the wrapping procedure starts and that the web reaches the wrapping material inlet depends
- on the velocity with which the web is moved and
- on the length of the path from the free end achieved after wrapping the previous object in the chamber to the inlet.

For properly controlling the web movement it is of advantage to know the length of the path along which this free web end has to be moved. This length is determined by the severing position at which the moveable severing member severs the web.

As the movement of the moveable severing member into the intermediate position is caused by the web moving member and the mechanical coupling element, variations in the movement of the web moving member inevitably cause variations in the movement of the moveable severing member out of the parking position. Therefore the intermediate position of the moveable severing member can vary from object to object to be wrapped and depending on varying environmental conditions and manufacturing tolerances and mechanical wear. But thanks to the severing actuator which operates independently from the web moving actuator these variations do substantially not influence the step of severing the web.

The web to be injected into the chamber is taken from a reservoir. This reservoir is positioned outside of the chamber. The severing location is positioned between the reservoir and the inlet. For injecting the web the web has to be conveyed from the severing location to the inlet. As the moveable web severing member is moved by the severing actuator into the web severing position and not by the web moving member, that segment of the web which extends between the severing location and the wrapping material reservoir has substantially the same length from object to object to be wrapped. The length of the path along which the web has to be conveyed is
- the length of the path from the reservoir to the wrapping material inlet (given by construction)
- reduced by the length of the path from the reservoir to the severing location.

The invention makes it possible that the path from the reservoir to the severing location has the same length from object to object to be wrapped. Therefore it is possible to control the wrapping procedure by using a sensor which measures the distance over which the web is moved after starting the wrapping procedure. The distance sensor can be positioned between the reservoir and the severing location. After starting the wrapping procedure the web has to be conveyed over a path to the wrapping material inlet. Thanks to the invention the length of this path remains substantially constant from object to object. After the web is moved over the corresponding constant distance, it reaches the wrapping material inlet. It is possible but thanks to the invention not necessary to monitor the injection of the web through the wrapping material inlet into the chamber. It suffices to use signals from the distance sensor.

Thanks to the severing actuator it is possible to ensure that the web is severed at the right time point, i.e. as early as possible and as late as necessary.

According to the invention a position sensor monitors the movement of the web moving member. The position sensor detects the event that the web moving member has reached a given position with respect to the wrapping material inlet. This given position can be the second position or a further position. The detection of the event that the web moving member has reached this given position triggers the severing actuator. The triggered severing actuator moves the moveable severing member into the web severing position.

Thanks to the position sensor it is possible but not necessary to operate the severing actuator in a purely time-based manner. Delays may have the consequence that the actual movement of the web moving member differs from a scheduled movement. Thanks to the coupling element the moveable severing member has also reached a defined position when the position sensor detects the event that the web moving member has reached the given position, e.g. the second position. It is not necessary that a sensor directly monitors the position or movement of the moveable severing member. It suffices that the position sensor monitors the web moving member. The construction of the wrapping apparatus and the detected position of the moveable severing member together determine the path over which the severing actuator has to move the moveable severing actuator into the web severing position.

### PREFERED EMBODIMENTS

According to the invention the moveable severing member can be moved between three different positions, namely
- the parking position,
- the intermediate position, and
- the web severing position.

Preferably a movement of the web moving member from the adjacent position into the or one remote position causes the moveable severing member to be moved from the parking position into the intermediate position. A movement of the web moving member from the or one remote position into the adjacent position causes the moveable severing member to be moved from the intermediate position back into the parking position. Both movements of the moveable severing member are transferred and therefore caused by the mechanical coupling element. This embodiment is in particular of advantage if the web moving member is moved back into the remote position after the web has been injected into the chamber. The moveable severing member is now ready for severing the web.

In one embodiment the web moving member comprises or is connected with a web deflecting member, e.g. a web deflecting roller. The web is guided around this web deflecting member. Thanks to this embodiment the web moving member tensions the web when the web is injected into the chamber and the web moving member is moved away from the wrapping material inlet into the or into one remote position.

Preferably the web is tensioned at least when being severed by the severing device. It is possible to increase the tension onto the web before the web is severed. The remaining web tends to contract after being severed. The following embodiment prevents an undesired feedback of the contracting web onto a wrapping material reservoir: The web is guided along at least one guiding member, e.g. a guiding roller. This guiding member enables a movement of the web towards the wrapping material inlet and prevents a movement of the web in the opposite direction, i.e. towards a wrapping material reservoir. Thereby this guiding member prevents the undesired feedback. Preferably a free-wheel clutch enables the rotation of the guiding member in one direction and inhibits its rotation in the opposite direction.

According to one embodiment the movement of the web moving member from the or one remote position into the adjacent position is coupled with a movement of the moveable severing member from the intermediate position into the parking position. Thanks to this embodiment the moveable severing member has the largest distance to the wrapping material inlet when the web moving member is in the adjacent position and the web is inserted into the chamber. Thanks to this large distance the risk is decreased that the moveable severing member causes a jam. In particular the risk is decreased that the moveable severing member blocks moved debris and thereby inhibits or otherwise influences in an undesired way the movement of the web towards the or through wrapping material inlet.

This embodiment often fits best to the requirements and constraints of the wrapping procedure. For moving the web towards the wrapping material inlet, the moveable severing member is not used and a larger distance between the moveable severing member and the wrapping material inlet is of advantage. In particular this larger distance reduces the risk that debris jams at the moveable severing member and pollutes the wrapping material inlet. After the web is injected through the wrapping material inlet into the chamber, the web moving member is no longer used for moving the web and a larger distance between the web moving member and the wrapping material inlet is possible and often desired, e.g. for tensioning the web or avoiding a jam. In particular this larger distance reduces the risk that debris jams at the web moving member and pollutes the wrapping material inlet. After the web has been injected into the chamber and touches the object to be wrapped, the moveable severing member takes the intermediate position. The reduced distance of the moveable severing member to the wrapping material inlet now causes no risk as the web is injected into and clamped in the chamber. An advantage of the intermediate position is: The severing actuator can later move quickly the moveable severing member into the web severing position. The web is now injected into the chamber.

Preferably the injected web is clamped between the object to be wrapped and a moving device, e.g. rollers or belts, surrounding the chamber and touching the object to be wrapped. The clamped web is pulled into the chamber with a higher force - compared with the force applied by the web moving member.

Preferably the moveable severing member is moved from the intermediate position into the web severing position in a direction vertically or sloping downwards. The force of gravity accelerates the movement into the web severing position and increases the severing effect. It is also possible that the moveable severing member is moved vertically or sloping upwards or in a horizontal direction. The movement can be a purely linear or a rotational or otherwise pivotal movement.

In one embodiment the severing actuator is a double-acting actuator, i.e. moves the moveable severing member from the intermediate position into the web severing position and back.

In one embodiment the severing device comprises a device for storing kinetic energy, e.g. at least one helical spring and/or hydraulic accumulator. The severing actuator uses stored kinetic energy for moving the moveable severing member from the intermediate position into the web severing position. Thanks to this embodiment the moveable severing member is moved very quickly into the web severing position. No hydraulic or electric motor is needed for this quick movement. The movement is performed nearly without delay after being triggered. In one implementation at least one helical spring stores kinetic energy and moves the moveable severing member into the web severing position.

In one implementation the severing actuator comprises the energy storing device and a single-acting actuator, e.g. at least one piston-cylinder unit or an electric motor, which moves the moveable severing member back from the web severing position into the intermediate position. Preferably this single-acting actuator further adds kinetic energy to the storing device, e.g. by tensioning or compressing at least one helical spring and by moving the moveable severing member against the force of the spring or by pressing fluid into an accumulator. This single-acting actuator needs not to operate quickly when moving back the moveable severing member as sufficient time is available after the web for one object is severed and until the web for the next object is to be severed.

In one implementation the mechanical coupling member couples the web moving member with the energy storing device. The coupling member transfers a movement of the web moving member from one position into a further position onto the storing device such that the amount of stored kinetic energy is increased.

Preferably the moveable severing member is releasably locked at the web moving member by means of a locking member. As long as the web moving member is moved, the locking connection between the moveable severing member and the web moving member is established. Preferably the locking connection is already established before the procedure of wrapping the object in the chamber is started and when the web moving member is in a remote position. This embodiment avoids an undesired movement of the moveable web severing member which may sever the web too early or damage the web. The locking connection is released when the moveable severing member is in the intermediate position and before the severing actuator moves the moveable severing member into the web severing position. The locking connection is established again after the severing actuator has moved the moveable severing member back into the intermediate position.

In one embodiment the severing device comprises a knife with a cutting edge and an opposing element, e.g. an anvil. The web is guided through a nip between the knife and the opposing element. For severing the web the knife is moved towards the opposing element.

In one implementation the knife belongs to the moveable severing member and the opposing element is stationary. In a further implementation the opposing element belongs to the moveable severing member and the knife is stationary. It is also possible that the knife and the opposing element both belong to the moveable severing member - similar to a pair of scissors.

In all the implementations of the severing device mentioned above the moveable web severing member being in the web severing position penetrates the web. In an alternative position the web is severed by tearing it. The moveable severing member and an opposite element clamp the web when the moveable severing member is in the web severing position. The clamped web is pulled into the chamber. Thereby the web is torn from two sides and thereby severed. This embodiment saves the need of providing the severing device with a cutting edge. Such a cutting edge needs to be grinded or sharpened from time to time and can injure a living being.

The wrapping material can comprise a net, a plastic sheet or film, or several strands of twine, e.g.

In one implementation the position sensor measures a value indicative of the distance over which the web is moved. In a further implementation the position sensor detects the event that the web reaches a given location.

In one embodiment the position sensor directly monitors the position of the moveable severing member.

In one implementation a moveable supporting plate belongs to the web moving member and supports from below the web while the web is moved towards the wrapping material inlet. The web moving actuator moves the supporting plate. The mechanical coupling element couples this supporting plate with the moveable severing member. The supporting plate reduces the risk that the web drops onto a moved part below the wrapping material inlet, e.g. into a rotating conveying device. In addition the supporting plate makes it possible that the web remains slack until it reaches the wrapping material inlet. This feature reduces the mechanical stress onto the web.

In one embodiment a web movement sensor measures the distance over which the web is moved towards the wrapping material inlet. The signals from this web movement sensor serve as values for the length of that segment of the web which is between the severing location and the wrapping material inlet and later already injected into the chamber. This embodiment enables placing a given number of web layers around the object in the chamber. The severing actuator is triggered depending on signals from this web movement sensor. This embodiment increases the reliability that the wrap around the object has the proper length.

In one embodiment the wrapping apparatus according to the invention belongs to an object forming and wrapping apparatus which further comprises an object forming means. This object forming means provides the chamber and forms in the provided chamber the object. The wrapping apparatus according to the invention injects a web of wrapping material into the chamber. At least one surface of the object in the chamber is wrapped into the injected web. Later the severing device according to the invention severs the web at the severing position.

The object forming means can comprise at least one driven pressing belt which partially surrounds the chamber. The object forming means can also comprise a plurality of driven pressing rollers which surround the chamber.

The object forming and wrapping apparatus can belong to a vehicle, in particular to an agricultural harvester, which is moved over ground. Crop material is injected into the chamber. While being moved the apparatus forms bales serving as the objects to be wrapped. The object forming and wrapping apparatus can also be implemented as a stationary plant, e.g. for processing recycling material or garbage.

These and other aspects of the invention and of the preferred embodiment will be even more apparent from the detailed embodiment as described below and will be elucidated in detail there.

### BRIEF DESCRIPTION OF THE DRAWINGS

Fig. 1 shows schematically in a side view the round baler comprising the wrapping apparatus according to the embodiment of the invention;
Fig. 2 shows in a detailed side view the web moving member of the baler of Fig. 1 in the remote position and the moveable severing member in the intermediate position after the severing device has severed the web for the previous bale;
Fig. 3 shows in the viewing direction of Fig. 2 the web moving member in the adjacent position and the moveable severing member in the parking position;

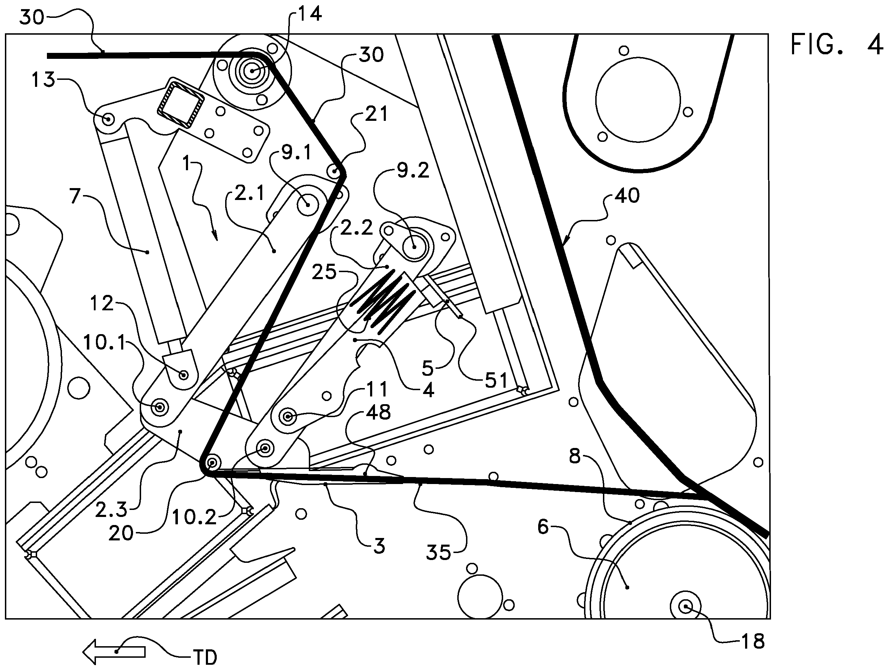

Fig. 4 shows in the viewing direction of Fig. 2 the web moving member again in the remote position after the web is injected and while the web moving member tensions the inserted web and the moveable severing member is again in the intermediate position;

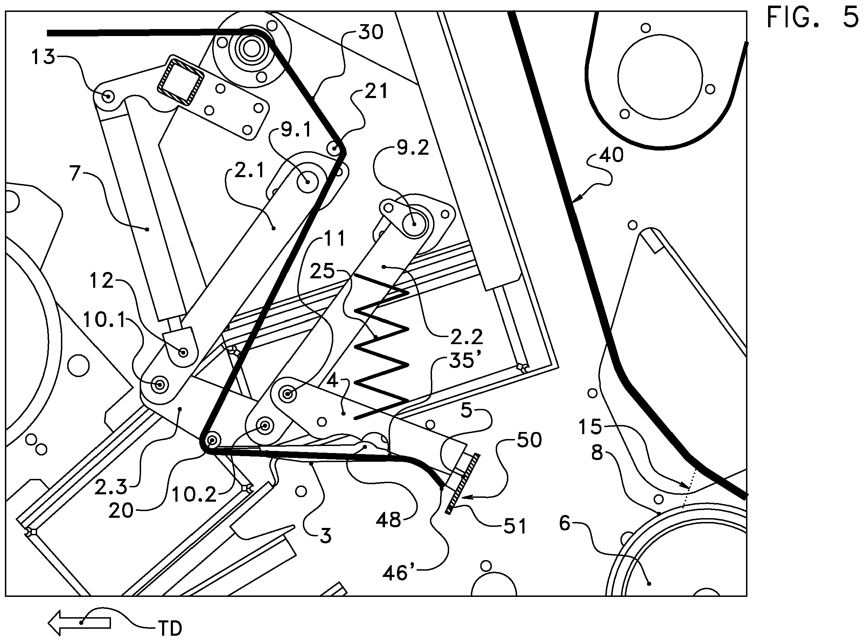

Fig. 5 shows in the viewing direction of Fig. 2 the web moving member in the remote position and the moveable severing member being moved into the web severing position.

### DETAILED DESCRIPTION OF EMBODIMENT

In the embodiment the invention is used on board of an agricultural vehicle which forms and wraps round-cylindrical bales in a drum-shaped bale forming chamber. This bale forming and wrapping apparatus (round baler) is schematically shown in the side view of Fig. 1 and is pulled by a tractor (not shown) or by a further other agricultural harvester over ground in a travelling direction TD (in Fig. 1 from right to left). The baler of the embodiment
- picks up loose crop material (hay, straw, grass, e.g.) from the ground and conveys the picked-up crop material through a feeding channel (not shown) in a direction opposite to the travelling direction TD,
- optionally cuts the crop material while it is conveyed through the feeding channel,
- presses the conveyed crop material through a crop material inlet into a drum-shaped bale forming chamber,
- rotates the injected crop material,
- forms under pressure in the bale forming chamber Ch from the injected and rotated crop material an increasing round-cylindrical bale B,
- wraps in the bale forming chamber Ch the circumferential surface of the formed bale B into wrapping material (a net or several strands of twine or plastic sheet), and
- ejects the wrapped bale B out of the bale forming chamber Ch.

The ejected bale B is deposited on the ground. In one embodiment a wrapper behind the bale forming chamber wraps the bale into plastic sheet (baler-wrapper combination). In one embodiment a tilting unit ("quarter turn") tilts the wrapped round-cylindrical bale B such that the bale is deposited on the ground on a front face.

The baler of Fig. 1 comprises
- a pick-up unit with several spring-mounted pick-up tines (not shown),
- a casing surrounding the bale forming chamber Ch wherein the casing comprises a stationary front housing and a pivotal tailgate (not shown),
- a driven conveyor rotor 39 with several rigid tines,
- a driven lower starter roller 42,
- a driven upper starter roller 6 mounted on a shaft 18 and comprising a conveying surface 8,
- several parallel driven pressing belts 40 surrounding the drum-shaped bale forming chamber Ch,
- two deflecting rollers 41.1, 41.2 and further deflecting rollers (not shown) which deflect the pressing belts 40,
- a guiding roller 44 and further guiding rollers (not shown) which guides the pressing belts 40, and
- a wrapping apparatus 29 with an unrolling station which rotatably holds a supply reel 32 for wrapping material.

The conveyor rotor 39 conveys the picked-up crop material through a feeding channel towards the bale forming chamber Ch. The conveyor rotor 39 engages from above or from below into the feeding channel and can cooperate with a cutting assembly (not shown). The upper starter roller 6 and the lower starter roller 42 form the two borders of a crop material inlet 43 which guides into the bale forming chamber Ch. Crop material is injected through this inlet 43 into the bale forming chamber Ch. Several longitudinal ribs are mounted on the circumferential surface 8 of the upper starter roller 6 and belong to the conveying surface 8. It is possible that such ribs are also mounted on the circumferential surface of the lower starter roller 42. The rollers 41.2, 44 are rotatably mounted at the pivotal tailgate. The driven starter rollers 42, 6, the roller 41.1 and the further deflecting or guiding rollers are rotatably mounted at the stationary front housing or at the pivotal tailgate. The pressing belts 40 and the starter rollers 6, 42 surround the drum-shaped bale forming chamber Ch in which the round-cylindrical bale B is created.

The horizontal rotating axes of the conveying rotor 39 and of the rollers 6, 41.1, 41.2, 42, 44 are perpendicular to the travelling direction TD and to the drawing plane of Fig. 1. Fig. 1 shows the rotating directions of the rollers 6, 42, 41.1, the conveying direction of the pressing belts 40, and the direction in which the bale B is rotated. The starter rollers 6, 42 are driven clockwise around rotating axes perpendicular to the drawing planes of Fig. 1. The upper starter roller 6 is mounted on the drive shaft 18 (perpendicular to the drawing plane). The drive shaft of the lower starter roller 42 is not shown.

In the embodiment the wrapping device 29 is mounted at a front plate of the stationary front housing, i.e. in front of the bale forming chamber - seen in the travelling direction TD.

In addition to the unrolling station the wrapping device 29 of the baler of Fig. 1 comprises
- a moveable supporting plate 3 belonging to a web moving member,
- a downholder unit 48 connected with the supporting plate 3 and positioned above the supporting plate 3, preferably implemented as an ensemble of pivotal flaps mounted at a traversal rod,
- two stationary web deflecting rollers 14, 21,
- a web movement sensor 26 which counts the number of rotations of the roller 21,
- a moveable web deflecting roller 20 connected with the moveable supporting plate 3,
- a stationary web guiding roller 24 which is biased against the web deflecting roller 21, and
- a severing device with a moveable knife 5 and a stationary anvil 19.

The term "stationary roller" means that the roller can only rotate around its own rotational axis but cannot be shifted laterally. In the embodiment the rollers 14, 21, 24, 20 are idle rollers.

Fig. 1 shows a situation in which the bale B in the chamber Ch is formed and the wrapping procedure has not yet started. A web 30 of wrapping material extends from the supply reel 32 to a severing location 50 outside of the bale forming chamber Ch. This situation occurs after the previous bale has been wrapped and the web 30 has been severed at the severing location 50. The web 30 is guided around the rollers 14, 21 and 20. The web 30 is guided through the space between the rollers 21 and 24. A wrapping material inlet 15 is positioned between the rollers 6, 41.1 and guides into the bale forming chamber Ch.

When the current bale B in the bale forming chamber Ch has reached the required diameter and has to be wrapped, the web 30 is moved towards the bale forming chamber Ch and is injected through wrapping material inlet 15 into the bale forming chamber Ch. The wrapping material inlet 15 is positioned below those segments of the belts 40 which are guided around the roller 41.1 and above the upper start roller 6. After being injected into the bale forming chamber Ch, the web 30 is clamped between the rotated bale B and the bale forming means (the rollers 8, 42 and later the pressing belts 40) and is pulled from the supply reel 32 without using the web moving member 3, 20, 48. This event causes the supply reel 32 to rotate.

In one implementation the stationary roller 14 serves as a spreader roller which spreads the moved web 30 of wrapping material. Thanks to the spreader roller 14 it is ensured that the web 30 keeps its full width and the entire circumferential surface of the bale B in the bale forming chamber Ch is wrapped, i.e. the web 30 reaches from front face to front face of the bale B.

In one implementation the number of revolutions of the deflecting roller 21 is counted by the sensor 26. As the roller 24 is biased against the roller 21, nearly no slippage between the roller 21 and the web 30 occurs. The counting starts when the wrapping procedure for a bale commences. The counted number serves as a value indicative of the length of the web 30 pulled from the supply reel 32.

Fig. 1 shows the supporting plate 3 in a remote position in which the supporting plate 3 has the maximal possible distance to the wrapping material inlet 15. The supporting plate 3 can be moved in both directions as indicated by the double arrow DA (to be described below). In one implementation (shown in the figures) the supporting plate 3 is orientated horizontally and can be moved in to horizontal directions with respect to the wrapping material inlet 15. In a further implementation (not shown) the supporting plate 3 is orientated in a descending sloping direction. The supporting plate 3 can be moved in this descending direction towards the wrapping material inlet 15 and in an opposite ascendingly directing away from the wrapping material inlet 15. The web deflecting roller 20 is moved together with the supporting plate 3 and can rotate around its own rotating axis but cannot otherwise be moved with respect to the supporting plate 3. In one implementation the web deflecting roller 20 is rotatably mounted at the supporting plate 3.

In addition the knife 5 of the baler of Fig. 1 can be moved in a vertical direction towards the anvil 19 for severing the web 30. The severing location 50 is arranged between the supporting plate 3 being in the remote position and the wrapping material inlet 15. The embodiment of Fig. 1 can also be implemented with a severing device wherein the knife 5 operates in a horizontal or sloping direction or wherein the knife is stationary and an opposing element is moveable. In Fig. 1 the knife 5 is shown in a parking position.

On its way from the supply reel 32 towards the wrapping material inlet 15 the web 30 is guided around the deflecting rollers 14, 21, and 20. The severing device 5, 19 is arranged downstream from the supporting plate 3 and downstream from the downholder unit 48 for the web 30, i.e. it severs the web 30 at the severing location 50 positioned between the supporting plate 3 being in the remote position and the wrapping material inlet 15. The term "downstream" refer to the direction in which the web 30 is conveyed towards the wrapping material inlet 15.

The supporting plate 3, the downholder unit 48, and the moveable web deflecting roller 20 cannot be moved relative to each other and belong to the web moving member of the embodiment. In the embodiment the web moving member 3, 20, 48 can be moved between two end positions with respect to the wrapping material inlet 15, namely a remote position and an adjacent position. In the embodiment the web moving member 3, 20, 48 is moved from one end position to the other end position continuously, i.e. without an interruption.

The knife 5 belongs to a moveable web severing member. The knife 5 and the stationary anvil 19 belong to a web severing device.

As can be seen in Fig. 1, a slack loose portion 31 of the web 30 extends from the front edge 46 of the web 30 (at the severing location 50) backwards to the supporting plate 3. A slack leading segment 35 rests on the supporting plate 3 and is kept by the downholder unit 48 on the supporting plate 3. In the embodiment this slack leading segment 35 extends from the leading edge of the web 30 to the deflecting roller 20, i.e. comprises the leading loose leading portion 31. The leading portion 35 protrudes from the supporting plate 3. The leading edge 46 of the web 30 points towards the wrapping material inlet 15.

Fig. 2 to Fig. 5 show a detailed cross-sectional view onto one embodiment of the bale forming and wrapping apparatus of Fig. 1 in a vertical center plane which is positioned in the middle of the bale forming and wrapping apparatus and which extends in the travelling direction TD. The viewing direction is that of Fig. 1.

Fig. 2 shows the supporting plate 3 positioned in the largest possible distance to the wrapping material inlet 15, i.e. being in the remote position. This remote position of the web moving member 3, 20, 48 is achieved after the web 30 for the previous bale has been injected into the bale forming chamber Ch and the previous bale has been wrapped. The severing device with the knife 5 has severed the web 30 at the severing location 50.

The web moving member 3, 20, 48 remains in this remote position while the current bale B is formed in the bale forming chamber Ch and until a given wrapping start condition is fulfilled. Preferably the wrapping start condition is fulfilled if the bale diameter reaches a given threshold. This diameter threshold can be the required final diameter or a slightly smaller diameter value. Thanks to the remote position sufficient space for providing the slack leading segment 35 during the entire movement towards the wrapping material inlet 15 is provided, i.e. the web segment from the supply reel 32 to the leading edge 46 - or a part of this segment - remains slack until the web 30 is injected into the bale forming chamber Ch. In addition the remote position provides a gap through which debris can pass through the gap between the leading segment 35 on the supporting plate 3 and the wrapping material inlet 15. The debris can drop onto the conveyor rotor 39.

In the embodiment the leading segment 35 of the web 30 rests on the supporting plate 3, is kept by the downholder unit 48, and remains slack at least while the current bale B is formed in the bale forming chamber Ch and while the wrapping device 29 is not used. The loose leading portion 31 of the leading segment 35 comprises the leading edge 46 of the web 30 and protrudes from the supporting plate 3 towards the wrapping material inlet 15. In the embodiment of Fig. 2 to Fig. 5 the slack leading segment 35 starts in the web deflecting roller 20, extends to the leading edge 46, and rests on the supporting plate 3. It is also possible that the leading segment 35 starts in the roller 14 or even in the supply reel 32.

In the embodiment of Fig. 2 to Fig. 5 the supporting plate 3 is connected with a frame 1 of the round baler by means of a parallelogram guider. This parallelogram guider comprises the following parts:
- a front guiding lever member 2.1 with a right front guiding lever arm and a corresponding left front guiding lever arm,
- a rear guiding lever member 2.2 with a right rear guiding lever arm and a corresponding left rear guiding lever arm, and
- a bearing member 2.3 for the supporting plate 3 with a right bearing and a corresponding left bearing.

The term "front" and "rear" refer to the travelling direction TD.

The supporting plate 3 is carried by the bearing member 2.3 and is positioned between the two bearings. The slack leading segment 35 of the web 30 rests on the supporting plate 3 and extends substantially from the left bearing to the right bearing of the bearing member 2.3. The downholder unit 48 keeps the leading segment 35 on the supporting plate 3.

The lever arms of the front guiding lever member 2.1 are pivotally connected with the frame 1 in a front pivoting axle 9.1 being perpendicular to the travelling direction TD and to the drawing plane of Fig. 2 to Fig. 5. The lever arms of the rear guiding lever member 2.2 are pivotally connected with the frame 1 in a rear pivoting axle 9.2 being parallel to the front pivoting axle 9.1. A distance between these parallel pivoting axles 9.1, 9.2 occurs. The pivoting axles 9.1, 9.2 are not moved while the web moving member 3, 20, 48 is moved out of the remote position towards the wrapping material inlet 15. The bearing member 2.3 is pivotally connected with the front guiding member 2.1 in a front pivoting axis 10.1 and with the rear guiding member 2.2 in a rear pivoting axis 10.2. The axles 10.1, 10.2 are parallel to the axles 9.1, 9.2. A distance between the parallel pivoting axes 10.1, 10.2 occurs.

Fig. 2 further shows
- a guiding member actuator 7 for the parallelogram guider 2.1, 2.2, 2.3,
- the moveable web deflecting element 20 (in the embodiment: a deflecting roller) which deflects the web 30 and which is rotatably mounted at the bearing member 2.3 and extends at least from the left bearing to the right bearing of the bearing member 2.3, and
- the two stationary web deflecting rollers 14, 21 for the web 30.

In Fig. 2 to Fig. 5 the optional guiding roller 24 and the web movement sensor 26 are omitted.

Preferably the guiding member actuator 7 is a double-acting actuator. In one implementation the guiding member actuator 7 comprises a right hydraulic piston-cylinder device and a corresponding left hydraulic piston-cylinder device. Expanding the actuator 7 causes the supporting plate 3 to be moved towards the wrapping material inlet 15. It is also possible that the guiding member actuator 7 comprises only one piston-cylinder device or a further actuator, e.g. an electrical motor. The guiding member actuator 7 is pivotally connected with the front guiding lever member 2.1 in a lower pivoting axis 12 and with the frame 1 in an upper pivoting axis 13.

Fig. 2 also shows a part of the upper starter roller 6 with the conveying surface 8 mounted on the drive shaft 18.

Fig. 2 further shows the moveable knife 5 with a cutting edge 51 extending perpendicular to the drawing plane. This cutting edge 51 of the knife 5 extends over the entire width of the web 30 and is mounted at the free end of a pivotal knife lever member 4 comprising a right knife lever arm and a corresponding left knife lever arm. The knife 5 is mounted between the knife lever arms. In its lower end the knife lever member 4 is pivotally connected with the bearing member 2.3 in a pivoting axle 11 which also extends perpendicular to the drawing plane of Fig. 2 and which is positioned between the knife 5 and the pivoting axis 10.2. The axle 11 and the rear guiding lever member 2.2 establish a mechanical connection between the supporting plate 3 and the knife lever member 4 carrying the knife 5.

Preferably the knife lever member 4 is locked at the rear guiding lever member 2.2 when the web moving member 3, 20, 48 is in the remote position. The knife lever member 4 is temporally also locked when the web moving member 3, 20, 48 is in an intermediate position. In the situation shown in Fig. 2 the knife lever member 4 and thereby also the knife 5 are in the intermediate position.

Moving the supporting plate 3 into the adjacent position (in Fig. 2 to Fig. 5 to the right), i.e. towards the wrapping material inlet 15, makes the knife lever member 4 rotating around the axle 11 away from the web 30 and away from the wrapping material inlet 15, in Fig. 2 to Fig. 5 anti-clockwise. Moving the supporting plate 3 into the remote position (in Fig. 2 to Fig. 5 to the left), i.e. away from the wrapping material inlet 15, makes the knife lever 4 rotating around the axle 11 towards the web 30 and towards the wrapping material inlet 15, in Fig. 2 to Fig. 5 clockwise.

The knife 5 and the knife lever member 4 as well as the anvil 19 belong to a severing device. The anvil 19 is not shown in Fig. 2 to Fig. 5. The parts 4 and 5 of the severing device together form the moveable severing member. Fig. 2 shows the moveable severing member 4, 5 in an intermediate position. Fig. 2 further shows a severing actuator 25 (to be explained below) having the form of two parallel lateral helical springs. In Fig.2 to Fig. 4 these helical springs 25 are pressed together and store kinetic energy.

Fig. 2 to Fig. 5 illustrate the operation of the wrapping apparatus 29. After the previous bale has been wrapped and the severing device 4, 5, 19 has severed the web 30 at the severing location 50, the piston-cylinder devices of the guiding member actuator 7 are or remain retracted and keep the web moving member 3, 20, 48 in the remote position (maximal distance to the wrapping material inlet 15). The moveable severing member 4, 5 is kept by the coupling element 2.2, 11 in the intermediate position. The web 30 is kept by the downholder unit 48 on the supporting plate 3 and is guided around the deflecting rollers 14, 21 and the web deflecting roller 20. Thanks to the downholder unit 48 the leading segment 35 does substantially not move with respect to the supporting plate 3 while the baler is moved over ground and also while the web moving member 3, 20, 48 is moved. The segment 35 from the roller 20 to the leading edge 46 is slack. Fig. 2 shows this situation.

The current diameter or a further parameter of the round-cylindrical bale B in the bale forming chamber Ch is measured. As soon as the bale diameter or a further measured bale parameter reaches a given threshold, the wrapping procedure is triggered. Fig. 3 shows a situation shortly after the wrapping procedure has started. The piston-cylinder device(s) of the guiding member actuator 7 are fully expanded and have pivoted the parallelogram guider 2.1, 2.2, 2.3 around the axes 9.1, 9.2 towards the wrapping material inlet 15 (direction of arrow M). The web moving member 3, 20, 48 is moved towards the wrapping material inlet 15 into the adjacent position without being tilted or pivoted. During the guided movement the upper surface of the supporting plate 3 does preferably not pivot but remains with the same angle to the ground. The conveying surface 8 with the ribs has conveyed the leading segment 35 further towards the wrapping material inlet 15. Fig. 3 shows the web moving member 3, 20, 48 in the adjacent position with respect to the wrapping material inlet 15. The web 30 has just been introduced through the wrapping material inlet 15 into the bale forming chamber Ch.

In the embodiment the knife lever member 4 is linked with the parallelogram guider 2.1, 2.2, 2.3 in the pivoting axis 11. Pivoting the parallelogram guider 2.1, 2.2, 2.3 towards the wrapping material inlet 15 makes the pivotal knife lever member 4 to pivot around the pivoting axis 10.2 anti-clockwise and away from the wrapping material inlet 15. As the knife lever member 4 is locked at the rear guiding lever member 2.2, the knife lever member 4 is not pivoted with respect to the rear guiding lever member 2.2 during this movement. The helical springs 25 remain compressed. Fig. 3 shows the moveable severing member 4, 5 in a parking position with the maximal possible distance to the wrapping material inlet 15. The movement of the supporting plate 3 from the position of Fig. 2 to the position of Fig. 3 was transferred onto the lever member 4. Thereby the moveable severing device 4, 5 was pivotally moved from the intermediate position of Fig. 2 into the parking position (maximal distance) of Fig. 3.

In one implementation the web segment from the stationary roller 21 to the leading edge 46 is so long that no web 30 needs to be pulled from the supply reel 32 while the supporting plate 3 moves the leading segment 35 towards the wrapping material inlet 15. The part of the web 30 upstream from the roller 21 remains not conveyed until the leading segment 35 is injected into the bale forming chamber Ch. The web segment between the rollers 21 and 20 is only rotated around a rotating axis through the roller 21 and perpendicular to the drawing plane of Fig. 1 to Fig. 5 but is not conveyed and is not tensioned. Wrapping material is only pulled from the supply reel 32 after the web 30 is injected into the bale forming chamber Ch and while the inserted web 30 is first clamped and pulled between the starter roller 6 and the rotated bale B and later additionally between the pressing belts 40 and the rotated bale B.

The web segment between the roller 21 and the leading edge 46 is so long and the remote position of the web moving member 3, 20, 48 is selected such that the web 30 is not moved with respect to the rollers 14, 21, 20 while the supporting plate 3 moves the leading segment 31 towards the wrapping material inlet 15 (transition from Fig. 2 to Fig. 3). The web 30 is only pulled from the supply reel 32 and moved and tensioned when the upper starter roller 6 and the rotated bale B have clamped the injected web 30.

In the situation shown in Fig. 3 the inserted web 30 has just been clamped between the rotated bale B and the surface 8 of the upper starter roller 6. The circumferential velocity of the bale B is larger than the moving velocity of the web moving member 3, 20, 48. The supply reel 32 is decelerated by a brake after the web 30 has been injected. Thereby the web 30 will now be tensioned. The roller 21 is rotated and the sensor 26 counts the number of rotations.

Fig. 4 shows the continuation of the wrapping procedure for this bale B. After the conveying surface 8 and the rotated bale B have securely grasped and clamped the web 30 and pull the web 30 from the supply reel 32, the piston-cylinder device(s) of the guiding member actuator 7 are retracted again and shift the web moving member 3, 20, 48 back in the remote position of Fig. 2 - or in a further remote position (not shown). In one implementation a sensor detects the event that the conveying velocity of the web 30 rapidly increases. This event is a clue for the event that the web 30 has successfully been injected and been clamped. The detection of this event triggers the step of moving the web moving member 3, 20, 48 back into the remote position.

The injected web 30 remains clamped by the conveying surface 8 and later by the belts 40 on the one side and the rotated bale B on the other side. The web 30 remains guided around the web deflecting roller 20. Therefore that segment of the web 30 which extends from the roller 20 to the wrapping material inlet 15 is now tensioned. This tensioning improves the wrapping procedure and ensures that the inserted web 30 covers the entire circumferential surface of the bale B without wrinkles.

As already mentioned the moveable severing member 4, 5 is connected with the web moving member 3, 20, 48 in the pivoting axis 11. Therefore the step of moving the web moving member 3, 20, 48 back into the remote positon is transferred onto the moveable severing member 4, 5. Thereby the moveable severing member 4, 5 is moved back from the parking position into the intermediate position.

Fig. 5 shows the termination of the wrapping procedure. The web moving member 3, 20, 48 remains in the remote position of Fig. 4 until the bale B is completely wrapped. Web 30 is pulled from the supply reel 32 until a required number of layers of wrapping material are placed around the bale B in the bale forming chamber. In one implementation the number of rotations of the roller 21 is counted by the sensor 26 and serves as a value indicative of the length of the pulled web 30. The web moving member 3, 20, 48 remains its remote position, i.e. its position in Fig. 4 is the same than that in Fig. 5. The movement of the moveable severing member 4, 5 from the intermediate position (Fig. 2) into the parking position (Fig. 3) and back into the intermediate position (Fig. 4) is caused purely by
- the movement of the web moving member 3, 20, 48 and
- the mechanical connection between the web moving member 3, 20, 48 and the moveable severing member 4, 5.

During these two movements the knife lever member 4 remains locked at the rear guiding lever member 2.2.

The transition from Fig. 4 to Fig. 5 starts with the step that the knife lever member 4 is released, i.e. is no longer connected with the rear guiding lever member 2.2. The stored kinetic energy is thereby released. In the situation shown in Fig. 5 a severing device actuator, e.g. an actuator comprising two lateral springs 25 or an electric motor (not shown), has further pivoted the severing device 4, 5 around the pivoting axis 11 towards and through the web 30. Thereby the severing device 4, 5 has been moved from the intermediate position of Fig. 4 into the web severing position of Fig. 5. The web 30 is severed at the severing position 50 between the knife 5 and the anvil 19 (not shown in Fig. 2 to Fig. 5). After the web 30 is severed, a new leading segment 35' with a new leading edge 46' is formed.

In the embodiment an actuator (not shown) releases the locking device between the rear guiding lever member 2.2 and the knife lever member 4. The compressed helical springs 25 expand and quickly rotate the knife lever member 4 clockwise around the axis 11.

The web 30 is tensioned after being injected and in particular until being severed. The tension causes the new leading segment 35' to be contracted after the web 30 is severed. A feedback of this contraction onto the rest of the web 30 should be avoided. The web 30 should stay in contact with the guiding rollers 14, 21, 20. Therefore the roller 24 is biased against the roller 21. The web 30 is guided through the space between the rollers 20, 21 and is touched from two opposing sides by the circumferential surfaces of the rollers 21, 24. In addition a free-wheel clutch enables the roller 24 only to rotate in one direction (in Fig. 1 anti-clockwise) but prevents the roller 24 from rotating in the opposite direction (in Fig. 1 clockwise). Therefore the contracting leading edge 35' cannot move the web 30 towards the supply reel 32. An undesired feedback is inhibited.

After the web 30 has been severed, the severing actuator moves back the moveable severing device 4, 5 from the web severing position of Fig. 5 into the intermediate position of Fig. 2. While this movement is performed, the web moving member 3, 20, 48 remains in the same remote position. Therefore the severing actuator of the embodiment is a double-acting actuator. Preferably the severing actuator comprises two single-acting actuators, namely a quick actuator 25 for quickly moving the moveable severing member from the intermediate position into the web severing position and a slow actuator for the opposite movement. The opposite movement needs not to be performed very quickly.

Preferably the quick actuator comprises an energy storing device, e.g. the helical or circular spring 25. The operation of the slow actuator fills the energy storage with kinetic energy. This kinetic energy is used for quickly moving the moveable severing device 4, 5 from the intermediate position into the web severing position.

In one implementation the cutting edge 51 of the knife 5 hits an anvil 19 (not shown in Fig. 2 to Fig. 5) after the knife lever member 4 has been rotated and the knife 5 has hit the web 30. In an alternative implementation the tension of the web 30 is so high that the knife 5 can penetrate and sever the web 30 without hitting an anvil 19. In yet a further implementation the severing device clamped the web 30 and the clamped web 30 is torn as the bale B and the bale forming means continue to pull at the web 30.

In both implementations a new slack leading segment 35' with a new leading edge 46' is formed and rests on the supporting plate 3, cf. Fig. 5. The new leading edge 46' is positioned at the knife 5. The severing actuator moves the severing device 4, 5 from the web severing position back into the intermediate position against the force of the springs 25. The procedure as just described will be performed again for the new bale.

Reference signs used in the claims will not limit the scope of the claimed invention. The term "comprises" does not exclude other elements or steps. The articles "a", "an", and "one" do not exclude a plurality of elements.

**LIST OF REFERENCE SIGNS**

| | |
|---|---|
| 1 | frame which carries the parallelogram guider 2.1, 2.2, 2.3 |
| 2.1 | front guiding lever member of the parallelogram guider, comprises two front guiding lever arms |
| 2.2 | rear guiding lever member of the parallelogram guider, comprises two rear guiding lever arms, carries the pivoting axle 11 |
| 2.3 | bearing member for the supporting plate 3, comprises two lateral bearings |
| 3 | moveable supporting plate, carries from below the slack leading segment 35, guided by the parallelogram guider |
| 4 | pivotal knife lever member for the knife 5, comprises two knife lever arms pivotally connected with the rear guiding lever member 2.2 in the axle 11, belongs to the moveable severing member of the severing device |
| 5 | knife, mounted on the free end of the pivotal knife lever arms of the knife lever member 4, belongs to the moveable severing member of the severing device |
| 6 | upper starter roller, delimit the crop material inlet 43 from above, has the conveying surface 8 |
| 7 | guiding member actuator for the parallelogram guider |
| 8 | conveying surface of the starter roller 6 |
| 9.1 | pivoting axle between the frame 1 and the front lever member 2.1 |
| 9.2 | pivoting axle between the frame 1 and the rear lever member 2.2 |
| 10.1 | pivoting axle between the front lever member 2.1 and the bearing member 2.3 |
| 10.2 | pivoting axle between the rear lever member 2.2 and the bearing member 2.3 |
| 11 | pivoting axle between the rear lever member 2.2 and the lever arms of the knife lever member 4 for the knife 5 |
| 12 | pivoting axle between the guiding member actuator 7 and the front lever member 2.1 |
| 13 | pivoting axle between the guiding member actuator 7 and the wrapping device frame 1 |
| 14 | upper stationary deflecting roller for the web 30, serves as a spreader roller |
| 15 | inlet for the web 30 of wrapping material, positioned between the upper starter roller 6 and the belt segment guided around the deflecting roller 41.1 |
| 16 | idler roller for pulling the web 30 from the supply reel 32, biased against the driven roller 17 |
| 17 | driven roller for pulling the web 30 from the supply reel 32 |
| 18 | driven shaft for the starter roller 6 |
| 19 | stationary anvil, serves as the opposing severing element for the knife 5 |
| 20 | moveable deflecting roller for the web 30, connected with the supporting plate 3, in one implementation mounted between the bearings 2.3 |
| 21 | driven stationary deflecting roller for the web 30, mounted at the frame 1 |
| 24 | web guiding roller with a free-wheel clutch |
| 25 | severing actuator in the form of two lateral helical spring |
| 26 | web movement sensor, counts the number of rotations of the roller 21 |
| 29 | wrapping device, comprises an unrolling station for the supply reel 32 |
| 30 | web of wrapping material |
| 31 | free loose portion of the web 30, belongs to the slack leading segment 35 |
| 32 | supply reel with wrapping material |
| 35 | slack leading segment of the web 30, rests on the supporting plate 3, points to the wrapping material inlet 15 |
| 35' | new slack leading segment of the web 30 |
| 39 | conveyor rotor |
| 40 | pressing belt(s), guided around the deflecting rollers 41.1, 41.2 |
| 41.1, 41.2 | deflecting rollers for the pressing belt 40 |
| 42 | lower starter roller, delimits the crop material inlet 43 from below |
| 43 | crop material inlet, delimited by the starter rollers 6 and 42 |
| 44 | guiding roller for the pressing belt 40 |
| 46 | leading edge of the web 30, positioned at the severing location 50 |
| 46' | new leading edge of the web 30, positioned at the severing location 50 |
| 48 | pivotal downholder unit for the web 30 |
| 50 | severing location at which the severing device 4, 5, 19, 25 severs the web 30 |
| 51 | cutting edge of the knife 5 |
| B | round-cylindrical bale in the bale forming chamber |
| Ch | drum-shaped bale forming chamber |
| DA | double arrow, shows the possible directions in which the supporting plate 3 can be moved. |
| M | direction in which the web moving member 3, 20, 48 is moved when carrying the leading segment 35 |
| TD | traveling direction of the baler |

## Claims

1. Wrapping apparatus for wrapping an object (B) contained in a chamber (Ch),
wherein a wrapping material inlet (15) leads into the chamber (Ch),
wherein the wrapping apparatus comprises
- a web moving member (3, 20, 48) positioned outside of the chamber (Ch),
- a web moving actuator (7), and
- a severing device (4, 5, 19, 25) comprising a moveable severing member (4, 5) being moveable between a parking position (Fig. 3) and a web severing position (Fig. 5),
wherein the wrapping apparatus further comprises a mechanical coupling element (2.2, 11) for coupling the web moving member (3, 20, 48) with the moveable severing member (4, 5),
wherein the web moving member (3, 20, 48)
- is moveable with respect to the wrapping material inlet (15) between at least one remote position (Fig. 2, Fig. 4, Fig. 5) and an adjacent position (Fig. 3) and
- is arranged for moving a web (30) of wrapping material towards the wrapping material inlet (15) while being moved into the adjacent position (Fig. 3),
wherein the web moving actuator (7) is arranged for moving the web moving member (3, 20, 48) with respect to the wrapping material inlet (15) between both positions, wherein the wrapping apparatus is arranged to inject the moved web (30) of wrapping material through the wrapping material inlet (15) into the chamber (Ch), and
wherein the severing device (4, 5, 19, 25) with the moveable severing member (4, 5) being moved into the web severing position (Fig. 5) is arranged to sever the web (30) at a severing location (50) positioned outside of the chamber (Ch) after the web (30) is injected into the chamber (Ch),
wherein the severing device (4, 5, 19, 25) further comprises a severing actuator (25) operable independently from the web moving actuator (7),
wherein the moveable severing member (4, 5) is further moveable into an intermediate position (Fig. 2, Fig. 4),
wherein the moveable severing member (4, 5) being in the intermediate position (Fig. 2, Fig. 4)
- is spaced apart from the web (30) and
- has a smaller distance to the web (30) compared with the moveable severing member (4, 5) being in the parking position (Fig. 3) and a larger distance compared with the moveable severing member (4, 5) being in the web severing position (Fig. 5),
wherein the mechanical coupling element (2.2, 11) couples a movement of the web moving member (3, 20, 48)
- from a first position (Fig. 3)
- into a second position (Fig. 4)
with a movement of the moveable severing member (4, 5)
- from the parking position (Fig. 3)
- into the intermediate position (Fig. 2, Fig. 4),
wherein the wrapping apparatus is arranged to temporarily keep the web moving member (3, 20, 48) in the second position (Fig. 4),
thereby causing the mechanical coupling element (2.2, 11) to simultaneously keep the moveable severing member (4, 5) in the intermediate position (Fig. 2, Fig. 4), and wherein the severing actuator (25) is arranged to move the moveable severing member (4, 5)
- from the intermediate position (Fig. 2, Fig. 4) into the web severing position (Fig. 5) and
- from the web severing position (Fig. 5) back into the intermediate position (Fig. 2, Fig. 4),
**characterized in that**
the wrapping apparatus comprises a position sensor
which is arranged to detect the event that the web moving member (3, 20, 48) or that the moveable severing member (4, 5) has reached a given position with respect to the wrapping material inlet (15),
wherein the wrapping apparatus is arranged to trigger the severing actuator (25) for moving the moveable severing member (4, 5) into the web severing position depending on signals from the position sensor.

2. Wrapping apparatus according to claim 1,
**characterized in that**
the mechanical coupling element (2.2, 11) couples a movement of the web moving member (3, 20, 48)
- from the adjacent position (Fig. 3) serving as the first position (Fig. 3)
- into the or at least one remote position (Fig. 2, Fig. 4, Fig. 5) serving as the second position (Fig. 4)
with a movement of the moveable severing member (4, 5)
- from the parking position (Fig. 3)
- into the intermediate position (Fig. 2, Fig. 4).

3. Wrapping apparatus according to one of the preceding claims,
**characterized in that**
the mechanical coupling element (2.2, 11) couples a movement of the web moving member (3, 20, 48)
- from the or at least one remote position (Fig. 2, Fig. 4, Fig. 5)
- into the adjacent position (Fig. 3)
with a movement of the moveable severing member (4, 5)
- from the intermediate position (Fig. 2, Fig. 4)
- into the parking position (Fig. 3).

4. Wrapping apparatus according to one of the preceding claims,
**characterized in that**
the wrapping apparatus is arranged to trigger the severing actuator (25) to move the moveable severing member (4, 5) into the web severing position
when the web moving member (3, 20, 48) is in the or in one remote position (Fig. 2, Fig. 4, Fig. 5).

5. Wrapping apparatus according to one of the preceding claims,
**characterized in that**
the wrapping apparatus comprises a locking member
for locking the moveable severing member (4, 5) at the web moving member (3, 20, 48), wherein the wrapping apparatus is arranged
- to selectively lock the moveable severing member (4, 5) by means of the locking member or
- to release the locking connection established by the locking member.

6. Wrapping apparatus according to one of the preceding claims,
**characterized in that**
the web moving member (3, 20, 48) comprises a supporting plate (3) being moveable with respect to the wrapping material inlet (15) between
- at least one remote position (Fig. 2, Fig. 4, Fig. 5) and
- an adjacent position (Fig. 3),
wherein the moveable supporting plate (3) is arranged to support from below a leading segment of the web (30),
wherein the web moving actuator (7) is arranged to move the supporting plate (3), and wherein the mechanical coupling element (2.2, 11) couples a movement of the supporting plate (3)
- from a first position (Fig. 3)
- into a second position (Fig. 4)
with a movement of the moveable severing member (4, 5)
- from the parking position (Fig. 3)
- into the intermediate position (Fig. 2, Fig. 4).

7. Wrapping apparatus according to claim 6,
**characterized in that**
the wrapping apparatus is arranged such that
the moved web (30) supported by the supporting plate (3) remains slack until the web (30) reaches the wrapping material inlet (15).

8. Wrapping apparatus according to one of the preceding claims,
**characterized in that**
the moveable severing member (4, 5) comprises
- a knife (5) and
- a pivotal lever member (4) being mechanically connected with the web moving member (3, 20, 48),
wherein the knife (5) is mounted at a free end of the lever member (4) and
wherein the mechanical coupling element (2.2, 11) is coupled with the lever member (4).

9. Wrapping apparatus according to one of the preceding claims,
**characterized in that**
the wrapping apparatus comprises a guiding member (2.1, 2.2, 2.3) for guiding the web moving member (3, 20, 48) between the first and the second position,
wherein the moveable severing member (4, 5) is mechanically connected with the guiding member (2.1, 2.2, 2.3).

10. Wrapping apparatus according to one of the preceding claims,
**characterized in that**
the wrapping apparatus comprises a web movement sensor (26)
which is arranged to measure a value indicative of the distance over which the web (30) is moved towards the wrapping material inlet (15),
wherein the wrapping apparatus is arranged to trigger
depending on signals from the web movement sensor (26)
the severing actuator (25) to move the moveable severing member (4, 5) into the web severing position (Fig. 5).

11. Wrapping apparatus according to one of the preceding claims,
**characterized in that**
the severing device (4, 5, 19, 25) comprises an energy storing device (25),
wherein a movement of the moveable severing member (4, 5)
- from the web severing position (Fig. 5)
- into the intermediate position (Fig. 2, Fig. 4)
increases the kinetic energy stored in the energy storing device (25) and
wherein the severing actuator (25) is arranged to move the moveable severing member (4, 5) from the intermediate position (Fig. 2, Fig. 4) into the web severing position (Fig. 5)
by using kinetic energy taken from the energy storing device (25).

12. Wrapping apparatus according to one of the preceding claims,
**characterized in that**
the web (30) is guided around at least one guiding member (14, 21, 24, 20),
wherein the or at least one guiding member (24) is arranged
- to enable a movement of the web (30) towards the wrapping material inlet (15) and
- to prevent a movement of the web (30) in the opposite direction.

13. Object forming and wrapping apparatus comprising
- an object forming means (6, 40, 41.1, 41.2, 42, 44) providing a chamber (Ch) and
- a wrapping apparatus according to one of the preceding claims,
wherein the object forming means (6, 40, 41.1, 41.2, 42, 44) is arranged to form an object (B) in the provided chamber (Ch),
wherein the wrapping apparatus is arranged to inject a web (30) into the chamber (Ch),
wherein the object forming and wrapping apparatus is arranged to wrap at least one surface of the formed object (B) in the chamber (Ch) into the injected web (30), and wherein the severing device (4, 5, 19, 25) is arranged to sever the web (30) at the severing location (50) after the web (30) is injected.

14. Method for wrapping an object (B) while the object (B) is contained in a
chamber (Ch),
wherein a wrapping material inlet (In) guides into the chamber (Ch),
wherein the method is performed by using a wrapping apparatus comprising
- a web moving member (3, 20, 48) being moveable with respect to the wrapping material inlet (In) between at least one remote position (Fig. 2, Fig. 4, Fig. 5) and an adjacent position (Fig. 3),
- a web moving actuator (7),
- a severing device (4, 5, 19, 25) with a moveable severing member (4, 5) being moveable between a parking position (Fig. 3) and a web severing position (Fig. 5), and
- a mechanical coupling element (2.2, 11),
wherein the method comprises the steps that
- the web moving actuator (7) moves the web moving member (3, 20, 48) from the or one remote position (Fig. 2, Fig. 4, Fig. 5) into the adjacent position (Fig. 3),
- the moved web moving member (3, 20, 48) moves a web (30) of wrapping material towards the wrapping material inlet (15) which leads into the chamber (Ch),
- the moved web (30) is injected through the wrapping material inlet (15) into the chamber (Ch),
- the moveable severing member (4, 5) is moved into the web severing position (Fig. 5) after the web (30) is injected into the chamber (Ch),
- the movement of the moveable severing member (4,5) causes the moved moveable severing member (4, 5) to sever the web (30) at a severing location (50) outside of the chamber (Ch), and
- the web moving actuator (7) moves the web moving member (3, 20, 48) from the adjacent position (Fig. 3) into the or one remote position (Fig. 2, Fig. 4, Fig. 5),
wherein the mechanical coupling element (2.2, 11) transfers
- a movement of the web moving member (3, 20, 48) from a first position (Fig. 3) into a second position (Fig. 4)
- onto the moveable severing member (4, 5),
the severing device (4, 5, 19, 25) further comprising a severing actuator (25) which can be operated independently from the web moving actuator (7) and the moveable severing member (4, 5) being further moveable into an intermediate position (Fig. 2, Fig. 4),
wherein the step that the movement of the web moving member (3, 20, 48) is transferred onto the moveable severing member (4, 5) comprises the further step that the movement of the web moving member (3, 20, 48)
- from the first position (Fig. 3)
- into the second position (Fig. 4)
causes the mechanical coupling element (2.2, 11) to move the moveable severing member (4, 5)
- from the parking position (Fig. 3)
- into the intermediate position (Fig. 2, Fig. 4),
thereby decreasing the distance between the moveable severing member (4, 5) and the web (30),
wherein the moveable severing member (4, 5) being moved into the intermediate position remains in a distance to the web (30),
wherein the method comprises the further steps that
- the web moving member is temporarily kept in the second position (Fig. 4) and
- the mechanical coupling element (2.2, 11) simultaneously keeps the moveable severing member (4, 5) in the intermediate position,
wherein the step that the web (30) is severed comprises the step that
the severing actuator (25) moves the moveable severing member (4, 5)
- from the intermediate position (Fig. 2, Fig. 4)
- into the web severing position (Fig. 5), and
wherein the method comprises the further step that
the severing actuator (25) moves the moveable severing member (4, 5)
- from the web severing position (Fig. 5)
- back into the intermediate position (Fig. 2, Fig. 4),
**characterized in that**
the wrapping apparatus comprises a position sensor
which is arranged to detect the event that the web moving member (3, 20, 48) or that the moveable severing member (4, 5) has reached a given position with respect to the wrapping material inlet (15),
wherein the method comprises the further step that
the wrapping apparatus triggers the severing actuator (25) for moving the moveable severing member (4, 5) into the web severing position
depending on signals from the position sensor.

15. Wrapping method according to claim 14,
**characterized in that**
the mechanical coupling element (2.2, 11) transfers a movement of the web moving member (3, 20, 48)
- from the adjacent position (Fig. 3) serving as the first position
- into the or into one remote position (Fig. 2, Fig. 4, Fig. 5) serving as the second position
onto the moveable severing member (4, 5)
such that the moveable severing member (4, 5) is moved
- from the parking position (Fig. 3)
- into the intermediate position (Fig. 2, Fig. 4).

16. Wrapping method according to claim 14 or claim 15,
**characterized in that**
the method comprises the further step that
the mechanical coupling element (2.2, 11) transfers a movement of the web moving member (3, 20, 48)
- from the or from one remote position (Fig. 2, Fig. 4, Fig. 5)
- into the adjacent position (Fig. 3)
onto the moveable severing member (4, 5)
such that the moveable severing member (4, 5) is moved
- from the intermediate position (Fig. 2, Fig. 4)
- into the parking position (Fig. 3).

17. Wrapping method according to one of the claims 14 to 16,
**characterized in that**
the step that the web moving member (3, 20, 48) is moved
- from the or one remote position (Fig. 2, Fig. 4, Fig. 5) serving as the first position
- into the adjacent position (Fig. 3) serving as the second position
causes the moveable severing member (4, 5) to be moved
- from the intermediate position (Fig. 2, Fig. 4)
- into the parking position (Fig. 3) and
after the web (30) is inserted into the chamber (Ch) the steps are performed that the web moving member (3, 20, 48) is moved back
- from the adjacent position (Fig. 3)
- into the or into one remote position (Fig. 2, Fig. 4, Fig. 5),
causing the mechanical coupling element (2.2, 11) to move the moveable severing member (4, 5)
- from the parking position (Fig. 3)
- into the intermediate position (Fig. 2, Fig. 4), and
the severing actuator (25) moves the moveable severing member (4, 5)
- from the intermediate position (Fig. 2, Fig. 4)
- into the web severing position (Fig. 5).

18. Object forming and wrapping method comprising the steps that
- an object forming means (6, 40, 41.1, 41.2, 42, 44) providing a chamber (Ch) forms an object (B) in the provided chamber (Ch),
- a web (30) of wrapping material is injected into the chamber (Ch) by using a method according to one of the claims 14 to 17 while the formed object (B) is in the chamber (Ch),
- at least one surface of the object (B) in the chamber (Ch) is wrapped into the injected web (30), and
- the severing device (4, 5, 19, 25) severs the web (30) at the severing location (50).

## Patentansprüche

1. Einwickelvorrichtung zum Einwickeln eines Objekts (B), das in einer Kammer (Ch) aufgenommen ist,
wobei ein Einwickelmaterialeinlass (15) in die Kammer (Ch) führt,
wobei die Einwickelvorrichtung Folgendes aufweist:
- ein Gewebebewegungsbauteil (3, 20, 48), das außerhalb der Kammer (Ch) positioniert ist,
- einen Gewebebewegungsaktuator (7) und
- eine Trenneinrichtung (4, 5, 19, 25) mit einem beweglichen Trennbauteil (4, 5), das zwischen einer Parkposition (Fig. 3) und einer Gewebetrennposition (Fig. 5) beweglich ist,
wobei die Einwickelvorrichtung weiterhin ein mechanisches Koppelelement (2.2, 11) zum Koppeln des Gewebebewegungsbauteils (3, 20, 48) mit dem beweglichen Trennbauteil (4, 5) aufweist,
wobei das Gewebebewegungsbauteil (3, 20, 48)
- relativ zu dem Einwickelmaterialeinlass (15) zwischen mindestens einer entfernten (Fig. 2, Fig. 4, Fig. 5) und einer angenäherten Position (Fig. 3) beweglich ist und
- dazu angeordnet ist, ein Gewebe (30) von Einwickelmaterial in Richtung auf den Einwickelmaterialeinlass (15) zu bewegen, während es in die angenäherte Position (Fig. 3) bewegt wird,
wobei der Gewebebewegungsaktuator (7) für ein Bewegen des Gewebebewegungsbauteils (3, 20, 48) relativ zu dem Einwickelmaterialeinlass (15) zwischen beiden Positionen angeordnet ist, wobei die Einwickelvorrichtung dazu angeordnet ist, das bewegte Gewebe (30) von Einwickelmaterial durch den Einwickelmaterialeinlass (15) in die Kammer (Ch) einzubringen, und
wobei die Trenneinrichtung (4, 5, 19, 25) mit dem beweglichen Trennbauteil (4, 5), wenn es in die Gewebetrennposition (Fig. 5) gebracht wird, dazu angeordnet ist, das Gewebe (30) an einem außerhalb der Kammer (Ch) angeordneten Trennort (50) zu trennen, nachdem das Gewebe (30) in die Kammer (Ch) eingebracht wurde,
wobei die Trenneinrichtung (4, 5, 19, 25) weiterhin einen Trennaktuator (25) aufweist, der unabhängig von dem Gewebebewegungsaktuator (7) beweglich ist,
wobei das bewegliche Trennbauteil (4, 5) weiterhin in eine Zwischenposition (Fig. 2, Fig. 4) beweglich ist,
wobei das bewegliche Trennbauteil (4, 5), wenn es sich in der Zwischenposition (Fig. 2, Fig. 4) befindet,
- von dem Gewebe (30) beabstandet ist und
- im Vergleich zu dem beweglichen Trennbauteil (4, 5) einen kleineren Abstand zu dem Gewebe (30) besitzt, wenn sich dieses in der Parkposition (Fig. 3) befindet, und im Vergleich zu dem beweglichen Trennbauteil (4, 5) einen größeren Abstand besitzt, wenn sich dieses in der Gewebetrennposition (Fig. 5) befindet,
wobei das mechanische Koppelelement (2.2, 11) eine Bewegung des Gewebebewegungsbauteils (3, 20, 48)
- von einer ersten Position (Fig. 3)
- in eine zweite Position (Fig. 4)
mit einer Bewegung des beweglichen Trennbauteils (4, 5)
- von der Parkposition (Fig. 3)
- in die Zwischenposition (Fig. 2, Fig. 4)
koppelt,
wobei die Einwickelvorrichtung dazu angeordnet ist, das Gewebebewegungsbauteil (3, 20, 48) vorübergehend in der zweiten Position (Fig. 4) zu halten,
wodurch bewirkt wird, dass das mechanische Koppelelement (2.2, 11) gleichzeitig das bewegliche Trennbauteil (4, 5) in der Zwischenposition (Fig. 2, Fig. 4) hält, und
wobei der Trennaktuator (25) dazu angeordnet ist, das bewegliche Trennbauteil (4, 5)
- von der Zwischenposition (Fig. 2, Fig. 4) in die Gewebetrennposition (Fig. 5) und
- von der Gewebetrennposition (Fig. 5) zurück in die Zwischenposition (Fig. 2, Fig. 4) zu bewegen,
**dadurch gekennzeichnet, dass**
die Einwickelvorrichtung einen Positionssensor aufweist,
der dazu angeordnet ist, das Ereignis zu detektieren, dass das Gewebebewegungsbauteil (3, 20, 48) oder dass das bewegliche Trennbauteil (4, 5) eine vorgegebene Position relativ zu dem Einwickelmaterialeinlass (15) erreicht hat,
wobei die Einwickelvorrichtung dazu angeordnet ist, den Trennaktuator (25) dazu zu veranlassen, das bewegliche Trennbauteil (4, 5) in Abhängigkeit von Signalen von dem Positionssensor in die Gewebetrennposition zu bewegen.

2. Einwickelvorrichtung nach Anspruch 1,
**dadurch gekennzeichnet, dass**
das mechanische Koppelelement (2.2, 11) eine Bewegung des Gewebebewegungsbauteils (3, 20, 48)
- von der angenäherten Position (Fig. 3), die als die erste Position (Fig. 3) dient,
- in die oder mindestens eine entfernte Position (Fig. 2, Fig. 4, Fig. 5), die als die zweite Position (Fig. 4) dient,
mit einer Bewegung des beweglichen Trennbauteils (4, 5)
- von der Parkposition (Fig. 3)
- in die Zwischenposition (Fig. 2, Fig. 4)
koppelt.

3. Einwickelvorrichtung nach einem der vorhergehenden Ansprüche,
**dadurch gekennzeichnet, dass**
das mechanische Koppelelement (2.2, 11) eine Bewegung des Gewebebewegungsbauteils (3, 20, 48)
- von der oder mindestens einen entfernten Position (Fig. 2, Fig. 4, Fig. 5)
- in die angenäherte Position (Fig. 3)
mit einer Bewegung des beweglichen Trennbauteils (4, 5)
- von der Zwischenposition (Fig. 2, Fig. 4)
- in die Parkposition (Fig. 3)
koppelt.

4. Einwickelvorrichtung nach einem der vorhergehenden Ansprüche,
**dadurch gekennzeichnet, dass**
die Einwickelvorrichtung dazu angeordnet ist, den Trennaktuator (25) dazu zu veranlassen, das bewegliche Trennbauteil (4, 5) in die Gewebetrennposition zu bewegen,
wenn sich das Gewebebewegungsbauteil (3, 20, 48) in der oder einer entfernten Position (Fig. 2, Fig. 4, Fig. 5) befindet.

5. Einwickelvorrichtung nach einem der vorhergehenden Ansprüche,
**dadurch gekennzeichnet, dass**
die Einwickelvorrichtung ein Sperrbauteil aufweist
zum Sperren des beweglichen Trennbauteils (4, 5) an dem Gewebebewegungsbauteil (3, 20, 48), wobei die Einwickelvorrichtung dazu angeordnet ist,
- wahlweise das bewegliche Trennbauteil (4, 5) mittels des Sperrbauteils zu sperren oder
- die durch das Sperrbauteil hergestellte Sperrverbindung zu lösen.

6. Einwickelvorrichtung nach einem der vorhergehenden Ansprüche,
**dadurch gekennzeichnet, dass**
das Gewebebewegungsbauteil (3, 20, 48) eine Stützplatte (3) aufweist,
die relativ zu dem Einwickelmaterialeinlass (15) zwischen
- mindestens einer entfernten Position (Fig. 2, Fig. 4, Fig. 5) und
- einer angenäherten Position (Fig. 3)
beweglich ist,
wobei die bewegliche Stützplatte (3) dazu angeordnet ist, ein Führungssegment des Gewebes (30) von unten zu stützen,
wobei der Gewebebewegungsaktuator (7) dazu angeordnet ist, die Stützplatte (3) zu bewegen, und
wobei das mechanische Koppelelement (2.2, 11) eine Bewegung der Stützplatte (3)
- von einer ersten Position (Fig. 3)
- in eine zweite Position (Fig. 4)
mit einer Bewegung des beweglichen Trennelements (4, 5)
- von der Parkposition (Fig. 3)
- in die Zwischenposition (Fig. 2, Fig. 4)
koppelt.

7. Einwickelvorrichtung nach Anspruch 6,
**dadurch gekennzeichnet, dass**
die Einwickelvorrichtung so angeordnet ist, dass
das bewegte Gewebe (30), das von der Stützplatte (3) gestützt wird, schlaff bleibt,
bis das Gewebe (30) den Einwickelmaterialeinlass (15) erreicht.

8. Einwickelvorrichtung nach einem der vorhergehenden Ansprüche,
**dadurch gekennzeichnet, dass**
das bewegliche Trennbauteil (4, 5) Folgendes aufweist:
- ein Messer (5) und
- ein schwenkbares Hebelbauteil (4), das mechanisch mit dem Gewebebewegungsbauteil (3, 20, 48) verbunden ist,
wobei das Messer (5) an einem freien Ende des Hebelbauteils (4) montiert ist und
wobei das mechanische Koppelelement (2.2, 11) mit dem Hebelbauteil (4) gekoppelt ist.

9. Einwickelvorrichtung nach einem der vorhergehenden Ansprüche,
**dadurch gekennzeichnet, dass**
die Einwickelvorrichtung ein Führungsbauteil (2.1, 2.2, 2.3)
zum Führen des Gewebebewegungsbauteils (3, 20, 48) zwischen der ersten und der zweiten Position aufweist,
wobei das bewegliche Trennbauteil (4, 5) mechanisch mit dem Führungsbauteil (2.1, 2.2, 2.3) verbunden ist.

10. Einwickelvorrichtung nach einem der vorhergehenden Ansprüche,
**dadurch gekennzeichnet, dass**
die Einwickelvorrichtung einen Gewebebewegungssensor (26) aufweist,
der dazu angeordnet ist, einen Wert zu messen, der die Distanz anzeigt, über die das Gewebe (30) in Richtung auf den Einwickelmaterialeinlass (15) bewegt wird,
wobei die Einwickelvorrichtung dazu angeordnet ist,
in Abhängigkeit von Signalen des Gewebebewegungssensors (26)
den Trennaktuator (25) dazu zu veranlassen, das bewegliche Trennbauteil (4, 5) in die Gewebetrennposition (Fig. 5) zu bewegen.

11. Einwickelvorrichtung nach einem der vorhergehenden Ansprüche,
**dadurch gekennzeichnet, dass**
die Trenneinrichtung (4, 5, 19, 25) eine Energiespeichereinrichtung (25) aufweist,
wobei eine Bewegung des beweglichen Trennbauteils (4, 5)
- von der Gewebetrennposition (Fig. 5)
- in die Zwischenposition (Fig. 2, Fig. 4)
die kinetische Energie erhöht, die in der Energiespeichereinrichtung (25) gespeichert ist, und wobei der Trennaktuator (25) dazu angeordnet ist, das bewegliche Trennbauteil (4, 5) von der Zwischenposition (Fig. 2, Fig. 4) in die Gewebetrennposition (Fig. 5) zu bewegen,
indem er der Energiespeichereinrichtung (25) entnommene kinetische Energie verwendet.

12. Einwickelvorrichtung nach einem der vorhergehenden Ansprüche,
**dadurch gekennzeichnet, dass**
das Gewebe (30) um mindestens ein Führungsbauteil (14, 21, 24, 20) herum geführt ist,
wobei das oder mindestens ein Führungsbauteil (24) dazu angeordnet ist,
- eine Bewegung des Gewebes (30) in Richtung auf den Einwickelmaterialeinlass (15) zu ermöglichen und
- eine Bewegung des Gewebes (30) in die Gegenrichtung zu verhindern.

13. Objektform- und Einwickelvorrichtung, mit:
- einem Objektformmittel (6, 40, 41.1, 41.2, 42, 44), das eine Kammer (Ch) bereitstellt, und
- einer Einwickelvorrichtung nach einem der vorhergehenden Ansprüche,
wobei das Objektformmittel (6, 40, 41.1, 41.2, 42, 44) dazu angeordnet ist, ein Objekt (B) in der bereitgestellten Kammer (Ch) zu formen,
wobei die Einwickelvorrichtung dazu angeordnet ist, ein Gewebe (30) in die Kammer (Ch) einzubringen,
wobei die Objektform- und Einwickelvorrichtung dazu angeordnet ist, mindestens eine Oberfläche des geformten Objekts (B) in der Kammer (Ch) in das eingebrachte Gewebe (30) einzuwickeln, und
wobei die Trenneinrichtung (4, 5, 19, 25) dazu angeordnet ist, das Gewebe (30) an dem Trennort (50) zu trennen, nachdem das Gewebe (30) eingebracht wurde.

14. Verfahren zum Einwickeln eines Objekts (B) während das Objekt (B) in einer Kammer (Ch) aufgenommen ist,
wobei ein Einwickelmaterialeinlass (In) in die Kammer (Ch) führt,
wobei das Verfahren unter Verwendung einer Einwickelvorrichtung durchgeführt wird, die Folgendes aufweist:
- ein Gewebebewegungsbauteil (3, 20, 48), das relativ zu dem Einwickelmaterialeinlass (In) zwischen mindestens einer entfernten Position (Fig. 2, Fig. 4, Fig. 5) und einer angenäherten Position (Fig. 3) beweglich ist,
- einen Gewebebewegungsaktuator (7),
- eine Trenneinrichtung (4, 5, 19, 25) mit einem beweglichen Trennbauteil (4, 5), das zwischen einer Parkposition (Fig. 3) und einer Gewebetrennposition (Fig. 5) beweglich ist, und
- einem mechanischen Koppelelement (2.2, 11),
wobei das Verfahren die Schritte aufweist, dass
- der Gewebebewegungsaktuator (7) das Gewebebewegungsbauteil (3, 20, 48) von der oder einer entfernten Position (Fig. 2, Fig. 4, Fig. 5) in die angenäherte Position (Fig. 3) bewegt,
- das bewegte Gewebebewegungsbauteil (3, 20, 48) ein Gewebe (30) von Einwickelmaterial in Richtung auf den Einwickelmaterialeinlass (15) bewegt, der in die Kammer (Ch) führt,
- das bewegte Gewebe (30) durch den Einwickelmaterialeinlass (15) in die Kammer (Ch) eingebracht wird,
- das bewegliche Trennbauteil (4, 5) in die Gewebetrennposition (Fig. 5) bewegt wird, nachdem das Gewebe (30) in die Kammer (Ch) eingebracht wurde,
- die Bewegung des beweglichen Trennbauteils (4, 5) bewirkt, dass das bewegte bewegliche Trennbauteil (4, 5) das Gewebe (30) an einem Trennort (50) außerhalb der Kammer (Ch) trennt, und
- der Gewebebewegungsaktuator (7) das Gewebebewegungsbauteil (3, 20, 48) von der angenäherten Position (Fig. 3) in die oder eine entfernte Position (Fig. 2, Fig. 4, Fig. 5) bewegt,
wobei das mechanische Koppelelement (2.2, 11)
- eine Bewegung des Gewebebewegungsbauteils (3, 20, 48) von einer ersten Position (Fig. 3) in eine zweite Position (Fig. 4)
- auf das bewegliche Trennbauteil (4, 5)
überträgt,
wobei die Trenneinrichtung (4, 5, 19, 25) weiterhin einen Trennaktuator (25) aufweist, der unabhängig von dem Gewebebewegungsaktuator (7) betrieben werden kann und
wobei das bewegliche Trennbauteil weiterhin in eine Zwischenposition beweglich ist (Fig. 2, Fig. 4),
wobei der Schritt, dass die Bewegung des Gewebebewegungsbauteils (3, 20, 48) auf das bewegliche Trennbauteil (4, 5) übertragen wird, den weiteren Schritt aufweist, dass die Bewegung des Gewebebewegungsbauteils (3, 20, 48)
- von der ersten Position (Fig. 3)
- in die zweite Position (Fig. 4)
bewirkt, dass das mechanische Koppelelement (2.2, 11) das bewegliche Trennbauteil (4, 5)
- von der Parkposition (Fig. 3)
- in die Zwischenposition (Fig. 2, Fig. 4)
bewegt,
wobei es den Abstand zwischen dem beweglichen Trennbauteil (4, 5) und dem Gewebe (30) vergrößert,
wobei das bewegliche Trennbauteil (4, 5), wenn es in die Zwischenposition bewegt wird, in einem Abstand zu dem Gewebe (30) verbleibt,
wobei das Verfahren die weiteren Schritte aufweist, dass
- das Gewebebewegungsbauteil vorübergehend in der zweiten Position (Fig. 4) gehalten wird und
- das mechanische Koppelelement (2.2, 11) gleichzeitig das bewegliche Trennbauteil (4, 5) in der Zwischenposition hält,
wobei der Schritt, dass das Gewebe (30) getrennt wird, den Schritt aufweist, dass der Trennaktuator (25) das bewegliche Trennbauteil (4, 5)
- von der Zwischenposition (Fig. 2, Fig. 4)
- in die Gewebetrennposition (Fig. 5)
bewegt, und
wobei das Verfahren den weiteren Schritt aufweist, dass
der Trennaktuator (25) das bewegliche Trennbauteil (4, 5)
- von der Gewebetrennposition (Fig. 5)
- zurück in die Zwischenposition (Fig. 2, Fig. 4)
bewegt,
**dadurch gekennzeichnet, dass**
die Einwickelvorrichtung einen Positionssensor aufweist,
der dazu angeordnet ist, das Ereignis zu detektieren, dass das Gewebebewegungsbauteil (3, 20, 48) oder dass das bewegliche Trennbauteil (4, 5) eine vorgegebene Position relativ zu dem Einwickelmaterialeinlass (15) erreicht hat,
wobei das Verfahren den weiteren Schritt aufweist, dass
die Einwickelvorrichtung den Trennaktuator (25) dazu veranlassen, das bewegliche Trennbauteil (4, 5) in die Gewebetrennposition zu bewegen
in Abhängigkeit von Signalen von dem Positionssensor.

15. Einwickelverfahren nach Anspruch 14,
**dadurch gekennzeichnet, dass**
das mechanische Koppelelement (2.2, 11) eine Bewegung des Gewebebewegungsbauteils (3, 20, 48)
- von der angenäherten Position (Fig. 3), die als die erste Position dient,
- in die oder in eine entfernte Position (Fig. 2, Fig. 4, Fig. 5), die als die zweite Position dient, auf das bewegliche Trennbauteil (4, 5) überträgt,
so dass das bewegliche Trennbauteil (4, 5)
- von der Parkposition (Fig. 3)
- in die Zwischenposition (Fig. 2, Fig. 4)
bewegt wird.

16. Einwickelverfahren nach Anspruch 14 oder Anspruch 15,
**dadurch gekennzeichnet, dass**
das Verfahren den weiteren Schritt aufweist, dass
das mechanische Koppelelement (2.2, 11) eine Bewegung des Gewebebewegungsbauteils (3, 20, 48)
- von der oder von einer entfernten Position (Fig. 2, Fig. 4, Fig. 5)
- in die angenäherte Position (Fig. 3)
auf das bewegliche Trennbauteil (4, 5) überträgt,
so dass das bewegliche Trennbauteil (4, 5)
- von der Zwischenposition (Fig. 2, Fig. 4)
- in die Parkposition (Fig. 3)
bewegt wird.

17. Einwickelverfahren nach einem der Ansprüche 14 bis 16,
**dadurch gekennzeichnet, dass**
der Schritt, dass das Gewebebewegungsbauteil (3, 20, 48)
- von der oder einer entfernten Position (Fig. 2, Fig. 4, Fig. 5), die als die erste Position dient,
- in die angenäherte Position (Fig. 3), die als die zweite Position dient,
bewegt wird, bewirkt, dass das bewegliche Trennbauteil (4, 5)
- von der Zwischenposition (Fig. 2, Fig. 4)
- in die Parkposition (Fig. 3)
bewegt wird, und
nachdem das Gewebe (30) in die Kammer (Ch) eingebracht wurde, die Schritte ausgeführt werden, dass
das Gewebebewegungsbauteil (3, 20, 48)
- von der angenäherten Position (Fig. 3)
- in die oder in eine entfernte Position (Fig. 2, Fig. 4, Fig. 5),
zurückbewegt wird
und dadurch bewirkt, dass das mechanische Koppelelement (2.2, 11) das bewegliche Trennbauteil (4, 5)
- von der Parkposition (Fig. 3)
- in die Zwischenposition (Fig. 2, Fig. 4)
bewegt und
der Trennaktuator (25) das bewegliche Trennbauteil (4, 5)
- von der Zwischenposition (Fig. 2, Fig. 4)
- in die Gewebetrennposition (Fig. 5)
bewegt.

18. Objektform- und Einwickelverfahren mit den folgenden Schritten:
- ein Objektformmittel (6, 40, 41.1, 41.2, 42, 44), das eine Kammer (Ch) bereitstellt, formt ein Objekt (B) in der bereitgestellten Kammer (Ch),
- ein Gewebe (30) von Einwickelmaterial wird unter Verwendung eines Verfahrens nach einem der Ansprüche 14 bis 17 in die Kammer (Ch) eingebracht, während sich das geformte Objekt (B) in der Kammer (Ch) befindet,
- mindestens eine Oberfläche des Objekts (B) in der Kammer (Ch) wird in das eingebrachte Gewebe (30) gewickelt und
- das Trennbauteil (4, 5, 19, 25) trennt das Gewebe (30) an dem Trennort (50).

## Revendications

1. Appareil d'emballage pour emballer un objet (B) contenu dans une chambre (Ch),
dans lequel un orifice d'entrée de matériau d'emballage (15) mène dans la chambre (Ch),
dans lequel l'appareil d'emballage comprend
- un organe de déplacement de bande (3, 20, 48) positionné à l'extérieur de la chambre (Ch),
- un actionneur de déplacement de bande (7), et
- un dispositif de tranchage (4, 5, 19, 25) comprenant un organe de tranchage mobile (4, 5) qui est mobile entre une position de stationnement (figure 3) et une position de tranchage de bande (figure 5),
dans lequel l'appareil d'emballage comprend en outre un élément d'accouplement mécanique (2.2, 11) pour accoupler l'organe de déplacement de bande (3, 20, 48) à l'organe de tranchage mobile (4, 5),
dans lequel l'organe de déplacement de bande (3, 20, 48)
- est mobile par rapport à l'orifice d'entrée de matériau d'emballage (15) entre au moins une position à distance (figure 2, figure 4, figure 5) et une position adjacente (figure 3) et
- est agencé pour déplacer une bande (30) de matériau d'emballage vers l'orifice d'entrée de matériau d'emballage (15) tout en étant déplacé dans la position adjacente (figure 3),
dans lequel l'actionneur de déplacement de bande (7) est agencé pour déplacer l'organe de déplacement de bande (3, 20, 48) par rapport à l'orifice d'entrée de matériau d'emballage (15) entre les deux positions,
dans lequel l'appareil d'emballage est agencé pour injecter la bande déplacée (30) de matériau d'emballage à travers l'orifice d'entrée de matériau d'emballage (15) dans la chambre (Ch), et
dans lequel le dispositif de tranchage (4, 5, 19, 25) avec l'organe de tranchage mobile (4, 5) qui est déplacé dans la position de tranchage de bande (figure 5) est agencé pour trancher la bande (30) à un emplacement de tranchage (50) positionné à l'extérieur de la chambre (Ch) après que la bande (30) est injectée dans la chambre (Ch),
dans lequel le dispositif de tranchage (4, 5, 19, 25) comprend en outre un actionneur de tranchage (25) opérationnel indépendamment de l'actionneur de déplacement de bande (7),
dans lequel l'organe de tranchage mobile (4, 5) est en outre mobile dans une position intermédiaire (figure 2, figure 4),
dans lequel l'organe de tranchage mobile (4, 5) qui est dans la position intermédiaire (figure 2, figure 4)
- est espacé de la bande (30) et
- a une distance plus petite jusqu'à la bande (30) en comparaison avec l'organe de tranchage mobile (4, 5) qui est dans la position de stationnement (figure 3) et une distance plus grande en comparaison avec l'organe de tranchage mobile (4, 5) qui est dans la position de tranchage de bande (figure 5),
dans lequel l'élément d'accouplement mécanique (2.2, 11) accouple un déplacement de l'organe de déplacement de bande (3, 20, 48)
- d'une première position (figure 3)
- à une seconde position (figure 4)
avec un déplacement de l'organe de tranchage mobile (4, 5)
- de la position de stationnement (figure 3)
- à la position intermédiaire (figure 2, figure 4),
dans lequel l'appareil d'emballage est agencé pour conserver temporairement l'organe de déplacement de bande (3, 20, 48) dans la seconde position (figure 4),
amenant ainsi l'élément d'accouplement mécanique (2.2, 11) à conserver simultanément l'organe de tranchage mobile (4, 5) dans la position intermédiaire (figure 2, figure 4), et
dans lequel l'actionneur de tranchage (25) est agencé pour déplacer l'organe de tranchage mobile (4, 5)
- de la position intermédiaire (figure 2, figure 4) à la position de tranchage de bande (figure 5) et
- de la position de tranchage de bande (figure 5) de retour à la position intermédiaire (figure 2, figure 4),
**caractérisé en ce que**
l'appareil d'emballage comprend un capteur de position
qui est agencé pour détecter l'événement selon lequel l'organe de déplacement de bande (3, 20, 48) ou l'organe de tranchage mobile (4, 5) a atteint une position donnée par rapport à l'orifice d'entrée de matériau d'emballage (15),
dans lequel l'appareil d'emballage est agencé pour déclencher l'actionneur de tranchage (25) pour déplacer l'organe de tranchage mobile (4, 5) dans la position de tranchage de bande selon des signaux provenant du capteur de position.

2. Appareil d'emballage selon la revendication 1,
**caractérisé en ce que**
l'élément d'accouplement mécanique (2.2, 11) accouple un déplacement de l'organe de déplacement de bande (3, 20, 48)
- de la position adjacente (figure 3) servant de première position (figure 3)
- à la ou au moins une position à distance (figure 2, figure 4, figure 5) servant de seconde position (figure 4)
avec un déplacement de l'organe de tranchage mobile (4, 5)
- de la position de stationnement (figure 3)
- à la position intermédiaire (figure 2, figure 4).

3. Appareil d'emballage selon l'une des revendications précédentes,
**caractérisé en ce que**
l'élément d'accouplement mécanique (2.2, 11) accouple un déplacement de l'organe de déplacement de bande (3, 20, 48)
- de la ou au moins une position à distance (figure 2, figure 4, figure 5)
- à la position adjacente (figure 3)
avec un déplacement de l'organe de tranchage mobile (4, 5)
- de la position intermédiaire (figure 2, figure 4)
- à la position de stationnement (figure 3).

4. Appareil d'emballage selon l'une des revendications précédentes,
**caractérisé en ce que**
l'appareil d'emballage est agencé pour déclencher l'actionneur de tranchage (25) pour déplacer l'organe de tranchage mobile (4, 5) dans la position de tranchage de bande
lorsque l'organe de déplacement de bande (3, 20, 48) est dans la ou une position à distance (figure 2, figure 4, figure 5).

5. Appareil d'emballage selon l'une des revendications précédentes,
**caractérisé en ce que**
l'appareil d'emballage comprend un organe de blocage
pour bloquer l'organe de tranchage mobile (4, 5) au niveau de l'organe de déplacement de bande (3, 20, 48),
dans lequel l'appareil d'emballage est agencé
- pour bloquer sélectivement l'organe de tranchage mobile (4, 5) au moyen de l'organe de blocage ou
- pour libérer le raccordement de blocage établi par l'organe de blocage.

6. Appareil d'emballage selon l'une des revendications précédentes,
**caractérisé en ce que**
l'organe de déplacement de bande (3, 20, 48) comprend une plaque de support (3) qui est mobile par rapport à l'orifice d'entrée de matériau d'emballage (15) entre
- au moins une position à distance (figure 2, figure 4, figure 5) et
- une position adjacente (figure 3),
dans lequel la plaque de support mobile (3) est agencée pour supporter par-dessous un segment avant de la bande (30),
dans lequel l'actionneur de déplacement de bande (7) est agencé pour déplacer la plaque de support (3), et
dans lequel l'élément d'accouplement mécanique (2.2, 11) accouple un déplacement de la plaque de support (3)
- d'une première position (figure 3)
- à une seconde position (figure 4)
avec un déplacement de l'organe de tranchage mobile (4, 5)
- de la position de stationnement (figure 3)
- à la position intermédiaire (figure 2, figure 4).

7. Appareil d'emballage selon la revendication 6,
**caractérisé en ce que**
l'appareil d'emballage est agencé de sorte que
la bande déplacée (30) supportée par la plaque de support (3) reste lâche jusqu'à ce que la bande (30) atteigne l'orifice d'entrée de matériau d'emballage (15).

8. Appareil d'emballage selon l'une des revendications précédentes,
**caractérisé en ce que**
l'organe de tranchage mobile (4, 5) comprend
- un couteau (5) et
- un organe de levier pivotant (4) qui est raccordé mécaniquement à l'organe de déplacement de bande (3, 20, 48),
dans lequel le couteau (5) est monté au niveau d'une extrémité libre de l'organe de levier (4) et
dans lequel l'élément d'accouplement mécanique (2.2, 11) est accouplé à l'organe de levier (4).

9. Appareil d'emballage selon l'une des revendications précédentes,
**caractérisé en ce que**
l'appareil d'emballage comprend un organe de guidage (2.1, 2.2, 2.3) pour guider l'organe de déplacement de bande (3, 20, 48) entre la première et la seconde position,
dans lequel l'organe de tranchage mobile (4, 5) est raccordé mécaniquement à l'organe de guidage (2.1, 2.2, 2.3).

10. Appareil d'emballage selon l'une des revendications précédentes,
**caractérisé en ce que**
l'appareil d'emballage comprend un capteur de déplacement de bande (26) qui est agencé pour mesurer une valeur indicative de la distance sur laquelle la bande (30) est déplacée vers l'orifice d'entrée de matériau d'emballage (15),
dans lequel l'appareil d'emballage est agencé pour déclencher selon des signaux provenant du capteur de déplacement de bande (26)
l'actionneur de tranchage (25) pour déplacer l'organe de tranchage mobile (4, 5) dans la position de tranchage de bande (figure 5).

11. Appareil d'emballage selon l'une des revendications précédentes,
**caractérisé en ce que**
le dispositif de tranchage (4, 5, 19, 25) comprend un dispositif de stockage d'énergie (25),
dans lequel un déplacement de l'organe de tranchage mobile (4, 5)
- de la position de tranchage de bande (figure 5)
- à la position intermédiaire (figure 2, figure 4)
augmente l'énergie cinétique stockée dans le dispositif de stockage d'énergie (25) et
dans lequel l'actionneur de tranchage (25) est agencé pour déplacer l'organe de tranchage mobile (4, 5) de la position intermédiaire (figure 2, figure 4) à la position de tranchage de bande (figure 5)
en utilisant une énergie cinétique prélevée à partir du dispositif de stockage d'énergie (25).

12. Appareil d'emballage selon l'une des revendications précédentes,
**caractérisé en ce que**
la bande (30) est guidée autour d'au moins un organe de guidage (14, 21, 24, 20),
dans lequel l'organe de guidage ou au moins un organe de guidage (24) est agencé
- pour permettre un déplacement de la bande (30) vers l'orifice d'entrée de matériau d'emballage (15) et
- pour empêcher un déplacement de la bande (30) dans la direction opposée.

13. Appareil d'emballage et de formation d'objet comprenant
- un moyen de formation d'objet (6, 40, 41.1, 41.2, 42, 44) fournissant une chambre (Ch) et
- un appareil d'emballage selon l'une des revendications précédentes,
dans lequel le moyen de formation d'objet (6, 40, 41.1, 41.2, 42, 44) est agencé pour former un objet (B) dans la chambre fournie (Ch),
dans lequel l'appareil d'emballage est agencé pour injecter une bande (30) dans la chambre (Ch),
dans lequel l'appareil d'emballage et de formation d'objet est agencé pour emballer au moins une surface de l'objet formé (B) dans la chambre (Ch) dans la bande injectée (30), et
dans lequel le dispositif de tranchage (4, 5, 19, 25) est agencé pour trancher la bande (30) à l'emplacement de tranchage (50) après que la bande (30) est injectée.

14. Procédé d'emballage d'un objet (B) tandis que l'objet (B) est contenu dans une chambre (Ch),
dans lequel un orifice d'entrée de matériau d'emballage (In) guide dans la chambre (Ch),
dans lequel le procédé est réalisé en utilisant un appareil d'emballage comprenant
- un organe de déplacement de bande (3, 20, 48) qui est mobile par rapport à l'orifice d'entrée de matériau d'emballage (In) entre au moins une position à distance (figure 2, figure 4, figure 5) et une position adjacente (figure 3),
- un actionneur de déplacement de bande (7),
- un dispositif de tranchage (4, 5, 19, 25) avec un organe de tranchage mobile (4, 5) qui est mobile entre une position de stationnement (figure 3) et une position de tranchage de bande (figure 5), et
- un élément d'accouplement mécanique (2.2, 11),
dans lequel le procédé comprend les étapes selon lesquelles
- l'actionneur de déplacement de bande (7) déplace l'organe de déplacement de bande (3, 20, 48) de la ou d'une position à distance (figure 2, figure 4, figure 5) à la position adjacente (figure 3),
- l'organe de déplacement de bande déplacé (3, 20, 48) déplace une bande (30) de matériau d'emballage vers l'orifice d'entrée de matériau d'emballage (15) qui mène dans la chambre (Ch),
- la bande déplacée (30) est injectée à travers l'orifice d'entrée de matériau d'emballage (15) dans la chambre (Ch),
- l'organe de tranchage mobile (4, 5) est déplacé dans la position de tranchage de bande (figure 5) après que la bande (30) est injectée dans la chambre (Ch),
- le déplacement de l'organe de tranchage mobile (4, 5) amène l'organe de tranchage mobile déplacé (4, 5) à trancher la bande (30) à un emplacement de tranchage (50) à l'extérieur de la chambre (Ch), et
- l'actionneur de déplacement de bande (7) déplace l'organe de déplacement de bande (3, 20, 48) de la position adjacente (figure 3) à la ou une position à distance (figure 2, figure 4, figure 5),
dans lequel l'élément d'accouplement mécanique (2.2, 11) transfère
- un déplacement de l'organe de déplacement de bande (3, 20, 48) d'une première position (figure 3) à une seconde position (figure 4)
- sur l'organe de tranchage mobile (4, 5),
le dispositif de tranchage (4, 5, 19, 25) comprenant en outre
un actionneur de tranchage (25) qui peut être actionné indépendamment de l'actionneur de déplacement de bande (7) et
l'organe de tranchage mobile (4, 5) qui est en outre mobile dans une position intermédiaire (figure 2, figure 4),
dans lequel l'étape selon laquelle le déplacement de l'organe de déplacement de bande (3, 20, 48) est transféré sur l'organe de tranchage mobile (4, 5) comprend l'étape supplémentaire selon laquelle le déplacement de l'organe de déplacement de bande (3, 20, 48)
- de la première position (figure 3)
- à la seconde position (figure 4)
amène l'élément d'accouplement mécanique (2.2, 11) à déplacer l'organe de tranchage mobile (4, 5)
- de la position de stationnement (figure 3)
- à la position intermédiaire (figure 2, figure 4),
diminuant ainsi la distance entre l'organe de tranchage mobile (4, 5) et la bande (30),
dans lequel l'organe de tranchage mobile (4, 5) qui est déplacé dans la position intermédiaire reste à une distance de la bande (30),
dans lequel le procédé comprend les étapes supplémentaires selon lesquelles
- l'organe de déplacement de bande est conservé temporairement dans la seconde position (figure 4) et
- l'élément d'accouplement mécanique (2.2, 11) conserve simultanément l'organe de tranchage mobile (4, 5) dans la position intermédiaire,
dans lequel l'étape selon laquelle la bande (30) est tranchée comprend l'étape selon laquelle
l'actionneur de tranchage (25) déplace l'organe de tranchage mobile (4, 5)
- de la position intermédiaire (figure 2, figure 4)
- à la position de tranchage de bande (figure 5), et
dans lequel le procédé comprend l'étape supplémentaire selon laquelle
l'actionneur de tranchage (25) déplace l'organe de tranchage mobile (4, 5)
- de la position de tranchage de bande (figure 5)
- de retour à la position intermédiaire (figure 2, figure 4),
**caractérisé en ce que**
l'appareil d'emballage comprend un capteur de position
qui est agencé pour détecter l'événement selon lequel l'organe de déplacement de bande (3, 20, 48) ou l'organe de tranchage mobile (4, 5) a atteint une position donnée par rapport à l'orifice d'entrée de matériau d'emballage (15),
dans lequel le procédé comprend l'étape supplémentaire selon laquelle
l'appareil d'emballage déclenche l'actionneur de tranchage (25) pour déplacer l'organe de tranchage mobile (4, 5) dans la position de tranchage de bande
selon des signaux provenant du capteur de position.

15. Procédé d'emballage selon la revendication 14, **caractérisé en ce que**
l'élément d'accouplement mécanique (2.2, 11) transfère un déplacement de l'organe de déplacement de bande (3, 20, 48)
- de la position adjacente (figure 3) servant de première position
- à la ou une position à distance (figure 2, figure 4, figure 5) servant de seconde position
sur l'organe de tranchage mobile (4, 5) de sorte que l'organe de tranchage mobile (4, 5) soit déplacé
- de la position de stationnement (figure 3)
- à la position intermédiaire (figure 2, figure 4).

16. Procédé d'emballage selon la revendication 14 ou la revendication 15,
**caractérisé en ce que**
le procédé comprend l'étape supplémentaire selon laquelle
l'élément d'accouplement mécanique (2.2, 11) transfère un déplacement de l'organe de déplacement de bande (3, 20, 48)
- de la ou d'une position à distance (figure 2, figure 4, figure 5)
- à la position adjacente (figure 3) sur l'organe de tranchage mobile (4, 5) de sorte que l'organe de tranchage mobile (4, 5) soit déplacé
- de la position intermédiaire (figure 2, figure 4),
- à la position de stationnement (figure 3).

17. Procédé d'emballage selon l'une des revendications 14 à 16,
**caractérisé en ce que**
l'étape selon laquelle l'organe de déplacement de bande (3, 20, 48) est déplacé
- de la ou d'une position à distance (figure 2, figure 4, figure 5) servant de première position
- à la position adjacente (figure 3) servant de seconde position
amène l'organe de tranchage mobile (4, 5) à être déplacé
- de la position intermédiaire (figure 2, figure 4)
- à la position de stationnement (figure 3) et
après que la bande (30) est insérée dans la chambre (Ch) les étapes sont réalisées pour que l'organe de déplacement de bande (3, 20, 48) soit déplacé de retour
- de la position adjacente (figure 3)
- à la ou à une position à distance (figure 2, figure 4, figure 5),
amenant l'élément d'accouplement mécanique (2.2, 11) à déplacer l'organe de tranchage mobile (4, 5)
- de la position de stationnement (figure 3)
- à la position intermédiaire (figure 2, figure 4), et
l'actionneur de tranchage (25) déplace l'organe de tranchage mobile (4, 5)
- de la position intermédiaire (figure 2, figure 4)
- à la position de tranchage de bande (figure 5).

18. Procédé d'emballage et de formation d'objet comprenant les étapes selon lesquelles
- un moyen de formation d'objet (6, 40, 41.1, 41.2, 42, 44) fournissant une chambre (Ch) forme un objet (B) dans la chambre fournie (Ch),
- une bande (30) de matériau d'emballage est injectée dans la chambre (Ch) en utilisant un procédé selon l'une des revendications 14 à 17 tandis que l'objet formé (B) est dans la chambre (Ch),
- au moins une surface de l'objet (B) dans la chambre (Ch) est emballée dans la bande injectée (30), et
- le dispositif de tranchage (4, 5, 19, 25) tranche la bande (30) à l'emplacement de tranchage (50).
